**Europäisches Patentamt**

**European Patent Office**

**Office européen des brevets**

(11) Veröffentlichungsnummer: **0 137 179**
**B1**

(12) **EUROPÄISCHE PATENTSCHRIFT**

(45) Veröffentlichungstag der Patentschrift:
04.11.87

(21) Anmeldenummer: **84109167.1**

(22) Anmeldetag: **02.08.84**

(51) Int. Cl.⁴: **B 65 G 25/08**

(54) Vorrichtung zum Dekorieren von Objekten.

(30) Priorität: **27.08.83 DE 3330927**

(43) Veröffentlichungstag der Anmeldung:
**17.04.85 Patentblatt 85/16**

(45) Bekanntmachung des Hinweises auf die Patenterteilung:
**04.11.87 Patentblatt 87/45**

(84) Benannte Vertragsstaaten:
**AT BE CH DE FR GB IT LI LU NL SE**

(56) Entgegenhaltungen:
**DE-A-2 530 360**
**FR-A-2 203 759**
**US-A-2 881 699**
**US-A-3 698 542**

(73) Patentinhaber: **Werner Kammann Maschinenfabrik GmbH., Elsemühlenweg 83- 89, D-4980 Bünde (Westf.) (DE)**

(72) Erfinder: **Heidenreich, Horst, Mittelacker 10, D-4983 Kirchlengern (DE)**
Erfinder: **Kammann, Knut, Viktoriastrasse 14, D-4980 Bünde 1 (DE)**

(74) Vertreter: **Koepsell, Helmut, Dipl.- Ing., Mittelstrasse 7, D-5000 Köln 1 (DE)**

EP 0 137 179 B1

## Beschreibung

Die Erfindung betrifft eine Vorrichtung zum Dekorieren von Objekten mit wenigstens einer Behandlungsstation für die Objekte, die jeweils an einem die Vorrichtung schrittweise auf einem umlaufenden Transportweg entlang einer Führungsbahn durchlaufenden Objekthalter angebracht und nach Passieren wenigstens einer Behandlungsstation von diesem Objektträger freigegeben werden, wobei wenigstens ein Transportmittel für die Objektträger vorgesehen ist.

Bei einer derartigen, durch die US-PS-2 881 699 bekannten Vorrichtung zum Dekorieren von Objekte im Siebdruckverfahren ist ein kontinuierlich umlaufendes Tansportmittel in Form einer Kette vorgesehen, an der Mitnehmer angebracht sind, die mit den Objekthaltern formschlüssig verbunden sind. Die Objekthalter werden entlang einer umlaufenden Transportbahn, deren Verlauf dem der Transportkette entspricht, über den größten Teil der Erstreckung kontinuierlich transportiert. Lediglich im Bereich der Siebdruckstation erfolgt der Transport der Objekthalter und damit auch der von diesem getragenen Objekte schrittweise mit dem Ziel, eine umlaufende Bedruckung der im Querschnitt unrunden Objekte zu ermöglichen. Der schrittweise Vortransport der Objekthalter in der Druckstation wird dadurch erreicht, daß die dauernd mit den Objekthaltern in Eingriff bleibenden Mitnehmer entlang kurvenartiger Flächen an den Objekthaltern diesen gegenüber eine Kelativbewegung ausführen. Durch die Verwendung eines kontinuierlich umlaufenden Transportmittels unterliegt diese bekannte Vorrichtung, die zudem nur eine Behandlungsstation in Form einer Siebdruckstation vorsieht, bezüglich ihrer Verwendbarkeit gewissen Beschränkungen. Durch das umlaufende Transportmittel liegen Transportgeschwindigkeit und Verweilzeit in der Druckstation innerhalb enger Grenzen fest. Zwar besteht die Möglichkeit, durch entsprechende Ausgestaltung der mit den Mitnehmern zusammenwirkenden Kurvenfläche der Objekthalter die Transportgeschwindigkeit und auch die Verweilzeit in der Behandlungsstation innerhalb gewisser Grenzen zu variieren. Jedoch erfordert dies einen sehr großen Aufwand, da sämtliche Objekthalter an ihren mit den Mitnehmern zusammenwirkenden Kurvenflächen entsprechend ausgebildet sein müssen. Der Freiheitsgrad wird zudem dadurch eingeschränkt, daß der Verlauf der Kurven gebunden ist an die Querschnittsform des zu bedruckenden Objektes. Irgendwelche Änderungen der Arbeitsweise dieser bekannten Vorrichtung, beispielsweise im Hinblick auf unterschiedliche Verweilzeiten in bestimmten Behandlungsstationen sind nicht möglich. Zudem ist der schrittweise Vortransport der Objekte an deren unrunde Querschnittsform gebunden.

Ferner ist durch die DE-OS-24 02 836 und die US-PS-4 005 649 eine Siebdruckvorrichtung mit mehreren Behandlungsstationen bekannt, bei welcher ebenfalls ein kontinuierlich umlaufendes Transportmittel in Form einer Kette vorgesehen ist, an welchem die Objektträger fest angebracht sind. Hierbei wird das zu bedruckende Objekt beim Einlauf in die Maschine von einem der Objektträger umfaßt und von diesem durch die gesamte Maschine, also durch sämtliche Behandlungsstationen hindurch transportiert. Der Vorteil dieser bekannten Vorrichtung besteht darin, daß, nachdem das zu bedruckende Objekt einmal von einem Objektträger erfaßt worden war, seine relative Lage zu diesem festliegt. Damit kann auf einfache Weise erreicht werden, daß das Objekt in den einzelnen Druckstationen von vornherein eine bestimmte Position, insbesondere eine bestimmte Winkelposition zur jeweiligen Druckvorrichtung einnimmt, so daß es keiner besonderen Maßnahme bedarf, um das Objekt zu jeder Druckvorrichtung gesondert auszurichten. Andererseits ist es bei dieser bekannten Vorrichtung nicht möglich, die Objekte in bestimmten Stationen länger verweilen zu lassen als in anderen Stationen. Dies macht die Vorrichtung z. B. für das Bedrucken von Objekten aus Kunststoff wenig geeignet, da es dabei durchweg erforderlich ist, den in der jeweils letzten Station aufgebrachten Aufdruck zu trocknen, bevor der nächste Druckvorgang durchgeführt werden kann. Die Anordnung derartiger Trocknungsstationen würde unter den gegebenen Umständen dazu führen, daß die bekannte Vorrichtung sehr lang baut.

Das letztgenannte Problem wird bei einer durch die DE-OS-25 30 360 und die US-PS-4 048 914 bekannten Siebdruckmaschine vermieden, da letztere mit mehreren hin- und herbewegbaren, fest mit dem Antriebsmittel verbundenen Objektträgern versehen ist und das Objekt im Verlauf seines Transportes durch die Maschine hindurch von einem Objektträger freigegeben und vom folgenden Objektträger wieder aufgenommen wird. Dieser schrittweise Transport gibt die Möglichkeit, bezüglich der Verweilzeit in den einzelnen Stationen bestimmten Erfordernissen Rechnung zu tragen, beispielsweise derart, daß das Bedrucken der Objekte während eines Transportschrittes und das darauffolgende Trocknen des Aufdrucks in einer Station erfolgen, in welcher das Objekt während einer bestimmten Zeitdauer zwischen zwei Transportschritten verbleibt. Andererseits wird dieser Vorteil jedoch damit erkauft, daß beim Aufbringen von mehr als zwei Aufdrucken auf dem Objekt in den der ersten Druckstation folgenden Druckstationen die Objekte zunächst wieder ausgerichtet werden müssen, damit die einzelnen Aufdrucke die richtige relative Lage zueinander einnehmen.

Die Erfindung geht aus von einer Vorrichtung der einleitend beschriebenen Art. Ihr liegt die Aufgabe zugrunde, diese Vorrichtung so auszubilden, daß einerseits die Objekte während des Durchlaufens mehrerer Stationen in demselben Objektträger verbleiben, andererseits ein schrittweiser Transport der Objekte erfolgt, der es ermöglicht, die Transportbewegungen und die Verweilzeit in bestimmte Stationen den jeweiligen Erfordernissen anzupassen.

Zur Lösung dieser Aufgabe schlägt die Erfindung vor, daß die Objektträger lösbar mit dem hin- und herbewegbaren Transportmittel verbindbar sind und bei dessen Bewegung in Transportrichtung in Eingriff und bei dessen Bewegung entgegen der Transportrichtung außer Eingriff sind. Die Vorrichtung gemäß der Erfindung weist somit die Vorteile der vorstehend erläuterten bekannten Vorrichtungen auf. Einmal kann, wie bei der mit einem kontinuierlich umlaufenden Transportmittel versehenen Vorrichtungen, das Objekt während des Transports durch mehrere Behandlungsstationen, ggf. durch die gesamte Vorrichtung hindurch, von demselben Objektträger getragen werden, der nach Freigabe des Objektes - wiederum analog den mit einem umlaufenden Fördermittel versehenen Vorrichtungen - an den Anfang der Vorrichtung, beispielsweise an die Station, an welcher die Objekte angegeben werden, zurückgeführt wird. Es findet somit ebenfalls ein Umlauf der Halterungen auf einem in sich geschlossenen Transportweg statt, ohne daß jedoch das Transportmittel sich ebenfalls entlang dieser Umlaufbahn bewegt. Vielmehr wird durch die lösbare Verbindung zwischen Objektträgern einerseits und Transportmittel andererseits ein schrittweiser Vortransport der Objektträger mit den vorstehend bereits erläuterten Vorteilen einer flexibleren Anpassung an die jeweiligen Erfordernisse bei einfacher Ausgestaltung des Transportmittels ermöglicht.

Als besonders vorteilhaft hat sich eine Ausgestaltung erwiesen, bei welcher die Führungsbahn aus zwei Abschnitten besteht, die in einem Abstand voneinander angebracht sind, wobei der Abstand zwischen beiden Abschnitten der Führungsbahn durch hin- und herverschiebbare Teilabschnitte überbrückt wird. Zweckmäßig weisen die Abschnitte der Führungsbahn einen vertikalen Abstand voneinander auf, wobei die Teilabschnitte entsprechend vertikal hin- und herverschiebbar sind.

Gemäß einem weiteren Vorschlag der Erfindung kann jedem Abschnitt der Führungsbahn ein Transportmittel in Form wenigstens einer hin- und herbewegbaren Mitnehmerleiste zugeordnet sein, die sich im wesentlichen parallel zum jeweiligen Abschnitt erstreckt und quer zu ihren den Transport der Objektträger bewirkenden Hubbewegungen hin- und herverschiebbar ist, um die Mitnehmerleiste in und außer Eingriff mit auf dem zugehörigen Abschnitt befindlichen Objektträgern zu bringen. Vorteilhaft sind die beiden jeweils einem der beiden Abschnitte zugeordneten Mitnehmerleisten durch Verbindungselemente zu einem rahmenförmigen Bauteil verbunden, wobei die eine Mitnehmerleiste bei der Bewegung in der einen Richtung mit Objektträgern des einen Abschnittes der Führungsbahn und die andere Mitnehmerleiste bei der Bewegung in der anderen Richtung mit Objektträgern des anderen Abschnittes der Führungsbahn in Eingriff ist. D. h., daß jeder Hub des rahmenförmigen Bauteils zu einem Transportschritt genutzt werden kann. Als besonders vorteilhaft hat sich eine Ausgestaltung herausgestellt, bei welcher jedem Abschnitt der Führungsbahn zwei Mitnehmerleisten zugeordnet sind, die gegenläufig zueinander bewegbar sind. Im allgemeinen wird es zweckmäßig sein, die Leisten übereinander und in einem geringen Abstand voneinander anzuordnen. Wenn die beiden jeweils gleichsinnig bewegten Mitnehmerleisten beider Abschnitte der Transportbahn über Verbindungselemente miteinander verbunden sind, sind zwei rahmenförmige Bauteile vorhanden, die gegenläufig bewegbar sind. Der Vorteil einer derartige Ausgestaltung besteht darin, daß bei jedem Transporthub der beiden rahmenförmige Bauteile ein Vortransport der Objektträger durchgeführt werden kann, so daß - im Gegensatz zur Verwendung nur einer Mitnehmerleiste pro Abschnitt - die Transportschritte der Objektträger unmittelbar aufeinanderfolgen können, wenngleich dies nicht notwendig ist. Dadurch wird der Durchsatz an zu behandelnden Objekten pro Zeiteinheit wesentlich erhöht.

An den Mitnehmerleisten können Mitnehmer angebracht sein, über die die lösbare Verbindungen mit den Objektträgern hergestellt werden können. Die Anordnung der vorteilhaft verstellbar angebrachten Mitnehmer kann dabei in Abhängigkeit von den jeweiligen Erfordernissen gewählt werden. So ist es möglich, wenigstens einen Teil der Mitnehmer an der sie jeweils tragenden Mitnehmerleiste in Abständen voneinander anzubringen, die dem von der jeweiligen Mitnehmerleisten ausgeführten Hub entsprechen. In diesem Fall wird der Objektträger bei zwei aufeinanderfolgenden Transportschritten von zwei benachbarten Mitnehmern derselben Leiste weitertransportiert werden, wobei zwischen diesen Transportschritten eine der Dauer eines Transportschrittes entsprechende Zeit liegt, während welcher der Objektträger nicht vorbewegt wird. Andererseits kann die Anordnung so getroffen sein, daß wenigstens ein Teil der Mitnehmer an der sie jeweils tragenden Mitnehmerleiste in Abständen voneinander angebracht sind, die dem Doppelten der von den Mitnehmerleisten ausgeführten Hubes entsprechen. Hierbei wurde der Objektträger in unmittelbar aufeinanderfolgenden Transportschritten vorbewegt werden. Durch entsprechede Wahl der Abstände der Mitnehmer an den einzelnen Transportleisten besteht die Möglichkeit, die Vorbewegung der Objektträger den jeweiligen Erfordernissen in den Behandlungsstationen anzupassen.

Ferner können die Mitnehmer der jeweils demselben Abschnitt der Führungsbahn zugeordneten Mitnehmerleisten parallel zu dem in den Querrichtungen erfolgenden Hin- und Herbewegungen unterschiedliche Längen aufweisen, wobei die kürzeren Mitnehmer bei in Richtung auf die Objektträger vorgeschobener Endlage und die längeren Mitnehmer in der entgegengesetzten Endlage mit dem jeweiligen Fortsatz in Eingriff sind.

In den Stationen, in welchen der Objektträger zwischen zwei Transportschritten während der Dauer eines Transportschrittes verweilt, kann ein den Objektträger in seiner Lage sicherndes Feststellelement angeordnet sein, welches vorteilhaft ebenfalls an dem gemeinsamen Tragelement angebracht ist, an welchem ein die Hin- und Herbewegungen in den Querrichtungen übertragendes Antriebsglied angreift.

Die Vorrichtung gemäß der Erfindung weist im Grundsatz die umlaufende Führungsbahn jener bekannten Vorrichtungen auf, die mit einer umlaufenden Kette versehen sind. Dabei entspricht der obere Abschnitt der Führungsbahn dem Obertrum und der untere Abschnitt der Führungsbahn dem Untertrum einer solchen Kette. Der wesentliche Vorteil gegenüber der bekannten Ausführung liegt jedoch darin, daß es ohne weiteres möglich ist, auch den unteren Abschnitt für die Durchführung von Behandlungen zu verwenden. Bei den üblichen mit Ketten versehenen Vorrichtungen ist dies im allgemeinen mit erheblichen Schwierigkeite verbunden, wenn nicht gar praktisch unmöglich. Die von den einzelnen Objektträgern in den einzelnen Abschnitten der Führungsbahn ausgeführten Transportschritte brauchen nicht synchron miteinander abzulaufen. Vielmehr ist es beispielsweise dann, wenn der untere Abschnitt nicht zur Behandlung der Objekte verwendet wird, ohne weiteres möglich, die Objektträger auf dem schnellsten Wege wieder in die Ausgangslage bzw. in die Position zurückzubringen, in der sie durch den vertikal hin- und herbewegbaren Teilabschnitt der Führungsbahn wieder auf das Niveau des oberen Abschnittes gebracht werden. Im übrigen können auch diese Teilabschnitte mit Feststellmitteln für die z. B. wagenartigen Objektträger ausgebildet sein. Dies kann in der Weise geschehen, daß an den Führungen der Teilabschnitte für die Objektträger federnde Mittel angebracht sind, in welche die Objektträger bzw. deren Rollen einrasten.

In der Zeichnung sind einige Ausführungsbeispiele der Erfindung, teilweise im Schema, dargestellt. Es zeigen:

Fig. 1 die Vorderansicht einer Siebdruckmaschine, bei welcher das Objekt einseitig gehalten wird, teilweise im Schnitt,

Fig. 2 einen Ausschnitt aus der Seitenansicht dieser Maschine,

Fig. 3 eine der Fig. 2 entsprechende Draufsicht,

Fig. 4 in Seitenansicht die wesentlichen für die Kraftübertragung erforderlichen Elemente,

Fig. 5 in perspektivischer Ansicht einen Ausschnitt aus einem der beiden Endbereiche der Maschine mit der Einrichtung für den vertikalen Transport der Objektträger,

Fig. 6 eine der Fig. 5 entsprechende Darstellung, bei der jedoch einige Teile eine andere Lage einnehmen,

Fig. 7 in Stirnansicht eine Darstellung, in welcher die Teile die Lage etwa gemäß Fig. 5 einnehmen,

Fig. 8 in Stirnansicht eine Darstellung, in welcher die Teile die Lage etwa gemäß Fig. 6 einnehmen,

Fig. 9 eine der Fig. 6 entsprechende Darstellung, jedoch mit dem Objektträger in einer anderen Lage,

Fig. 10 eine der Fig. 7 entsprechende Darstellung, jedoch von der anderen Seite des Objektträgers gesehen,

Fig. 11 in Draufsicht einen Ausschnitt aus einer Einzelheit der Fig. 10,

Fig. 12 eine der Fig. 11 entsprechende Ansicht, in der einige Teile jedoch eine andere Lage einnehmen,

Fig. 13A + B Darstellungen des Zusammenwirkens der Mitnehmerleisten und des dadurch bewirkten Transports der Objektträger,

Fig. 14 eine der Fig. 1 entsprechende Darstellung einer Maschine zum Dekorieren von Objekten, bei welcher zwei Vorrichtungen gemäß den Fig. 1-13 einander gegenüberliegend zur beidseitigen Halterung der Objekte angeordnet sind.

Fig. 15 in Stirnansicht die Darstellung einer weiteren Ausführungsform,

Fig. 16 die dazugehörige Draufsicht,

Fig. 17 im Schema die Vorderansicht einer anderen Ausführungsform, teilweise im Schnitt.

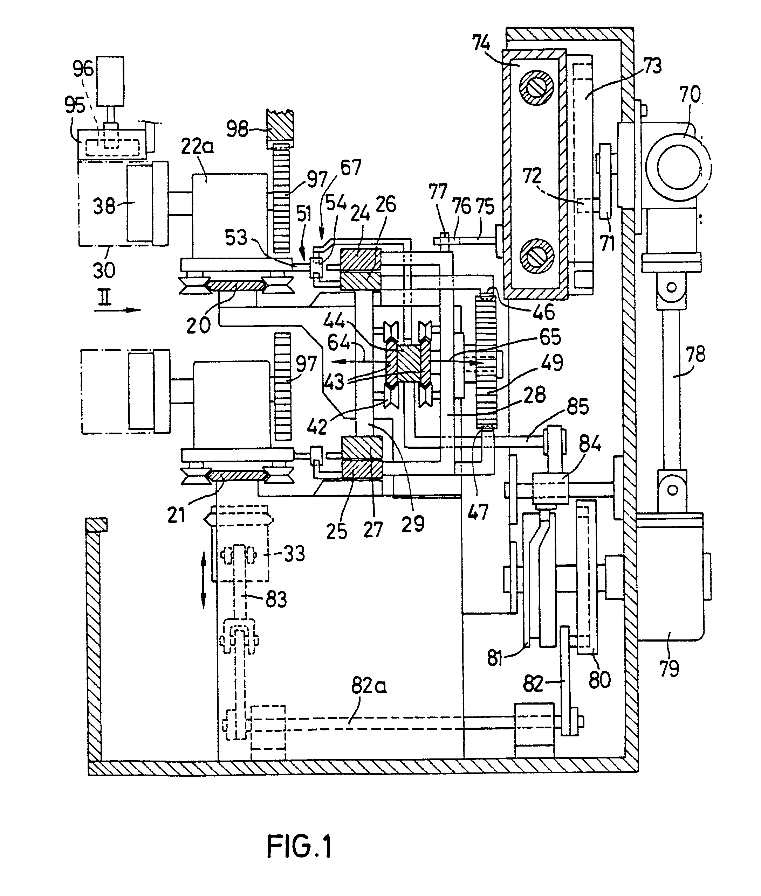

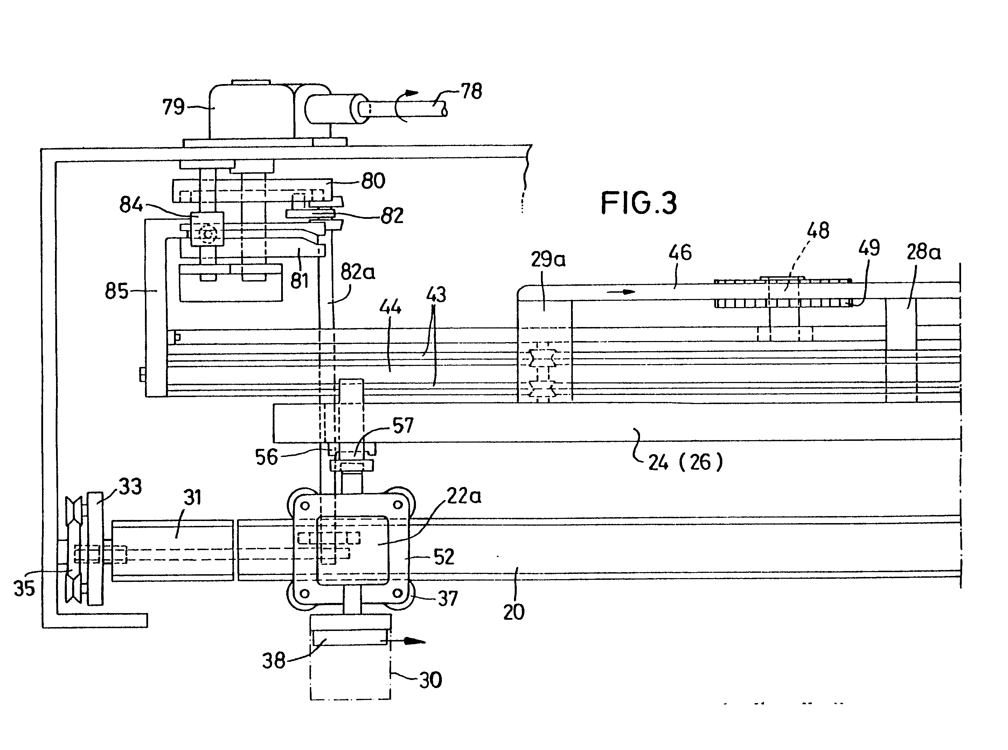

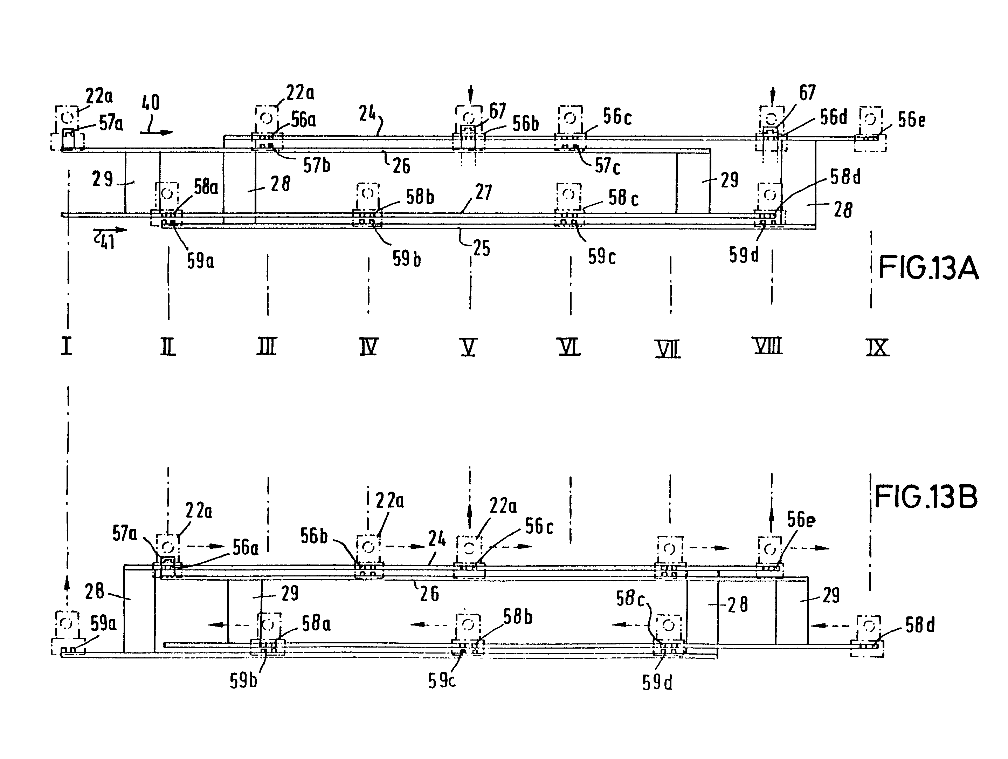

Das in den Figuren 1 - 13A, B dargestellte Ausführungsbeispiel ist mit einer Führungsbahn versehen, die zwei in einem vertikalen Abstand voneinander angeordnete Abschnitte 20, 21 aufweist. Entlang den Abschnitten 20 bzw. 21 sind Objektträger 22a bis 22x schrittweise verschiebbar. Ferner sind vier parallel zu den Abschnitten 20 bzw. 21 hin- und herverschiebbare Mitnehmerleisten 24 und 25 sowie 26 und 27 vorgesehen, die jeweils paarweise derart zu rahmenformigen Bauteilen zusammengefaßt sind, daß die beiden Mitnehmerleisten 24 und 25 einerseits und die beiden Mitnehmerleisten 26 und 27 andererseits über Verbindungselemente 28 bzw. 29 miteinander verbunden und von diesen getragen sind. Die Mitnehmerleisten 24 und 26 sind dem oberen Abschnitt 20 der Führungsbahn und die Mitnehmerleisten 25 und 27 deren unteren Abschnitt 21 zugeordnet. Sämtliche Mitnehmerleisten 24 - 27 sind in einer vertikalen Ebene an der Seite der Abschnitte 20 bzw. 21 bzw. der Objektträger 22a bis 22x angeordnet, die der Seite der Objektträger abgekehrt ist, an welcher sich Halterungen 38 für die zu behandelnden Objekte 30 befinden, die in diesem Fall nach Art eines Glases oder Bechers ausgebildet sind.

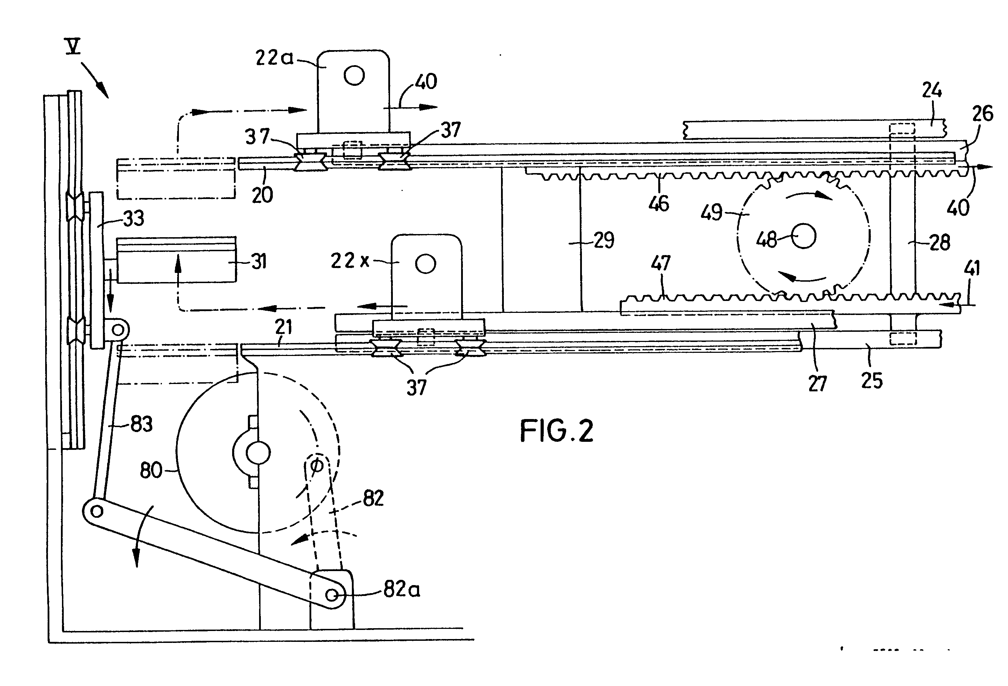

An beiden Enden der Abschnitte 20 und 21 der Führungsbahn ist jeweils ein Teilabschnitt 31 bzw. 32 angeordnet (Fig. 2 bis 6), der jeweils von einer Halterung 33 bzw. 34 getragen ist, die um eine dem Abstand zwischen den beiden Abschnitten 20 und 21 entsprechende Wegstrecke an vertikalen Führungen 35 bzw. 36 hin- und herbewegbar ist. Die Führungsmittel können dabei in gleicher Weise ausgebildet sein wie bei den Objektträgern 22a bis 22x, die mit Führungsrollen 37 versehen sind, die mit den Längsrändern der Abschnitte 20 und. 21 sowie der Teilabschnitte 31 und 32 zusammenwirken.

Entsprechendes gilt auch für die entlang den Führungsbahnabschnitten 21 und 22, also in Richtung der Pfeile 40 bzw. 41, hin- und herbewegbaren Mitnehmerleisten 24 und 25 bzw. 26 und 27. Die sie jeweils verbindenden Verbindungselemente 28 bzw. 29 sind mit Führungsrollen 42 versehen, die an Führungsleisten 43 geführt sind. Letztere werden von einem gemeinsamen Träger oder von gemeinsamen Trägerabschnitten 44 getragen, der bzw. die parallel zu den Mitnehmerleisten 24-27 in einer zwischen den Leisten 26 und 27 verlaufenden Ebene angeordnet ist bzw. sind. Beide Verbindungselemente 28 und 29 sind mit jeweils einer Zahnstange 46 bzw. 47 versehen. Beide Zahnstangen kämmen mit einem gemeinsamen Zahnrad 49, das den hin- und hergehenden Bewegungen der Mitnehmerleisten 24 - 27 entsprechende oszillierende Drehbewegungen ausführt und am Träger 44 angebracht ist.

Jeder der Objektträger 22a - 22x ist an seiner den Mitnehmerleisten 24 - 27 zugekehrten Seiten mit einem Fortsatz 51 versehen, der im wesentlichen T-förmig ausgebildet derart, daß sich vom Objektträger, z. B. einer die Führungsrollen 37 desselben tragenden Grundplatte 52, ein im wesentlichen horizontaler Steg 53 erstreckt, der an seinem freien Ende einen vertikalen, den Steg 53 nach oben und unten überragenden Flansch 54 trägt. Der Fortsatz 51 ist auf einem Niveau angeordnet, in welchem er bei auf dem oberen Abschnitt 20 der Führungsbahn befindlichem Objektträger 22a - x den beiden oberen, nur einen geringen vertikalen Abstand voneinander aufweisenden Mitnehmerleisten 24 und 26 und bei auf dem unteren Abschnitt 21 befindlichem Objektträger den beiden in gleicher Weise zueinanderangeordneten Mitnehmerleisten 25 und 27 gegenüberliegt.

Die Mitnehmerleisten 24 - 27 sind ihrerseits mit Mitnehmern 56a - 56e bzw. 57a - 57c bzw. 58a - 58d bzw. 59a - 59d versehen. Die Mitnehmer 56a - 56b bzw. 58a - 58d der Leisten 24 und 27 sind in Draufsieht U- oder gabelförmig ausgebildet, D. h., daß sie jeweils zwei Vorsprünge 61 aufweisen, die sich von der jeweils zugehörigen Mitnehmerleiste 24 bzw. 27 horizontal erstrecken und in Bewegungsrichtung 40 bzw. 41 der Mitnehmerleisten einen ggf. von außen nach innen abnehmenden Abstand voneinander aufweisen, der der Abmessung des Flansches 54 des Fortsatzes 51 an den Objektträgern 22a -22x enspricht. Somit können die beiden Vorsprüge 61 jedes Mitnehmers 56a - 56e bzw. 58a - 58d den Flansch 54 jedes Objektträgers passend zwischen sich aufnehmen.

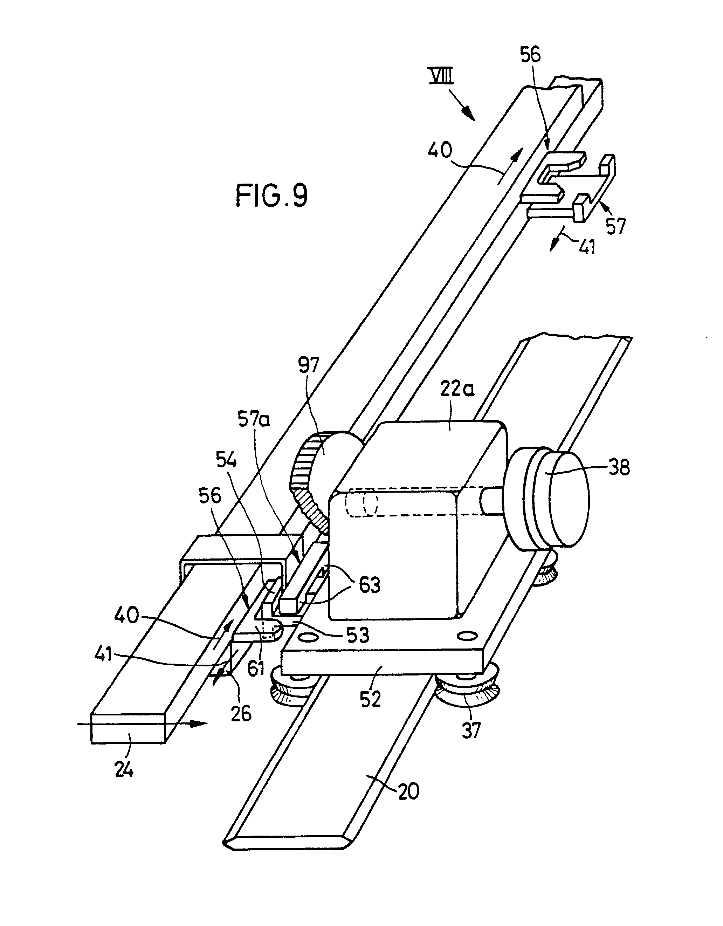

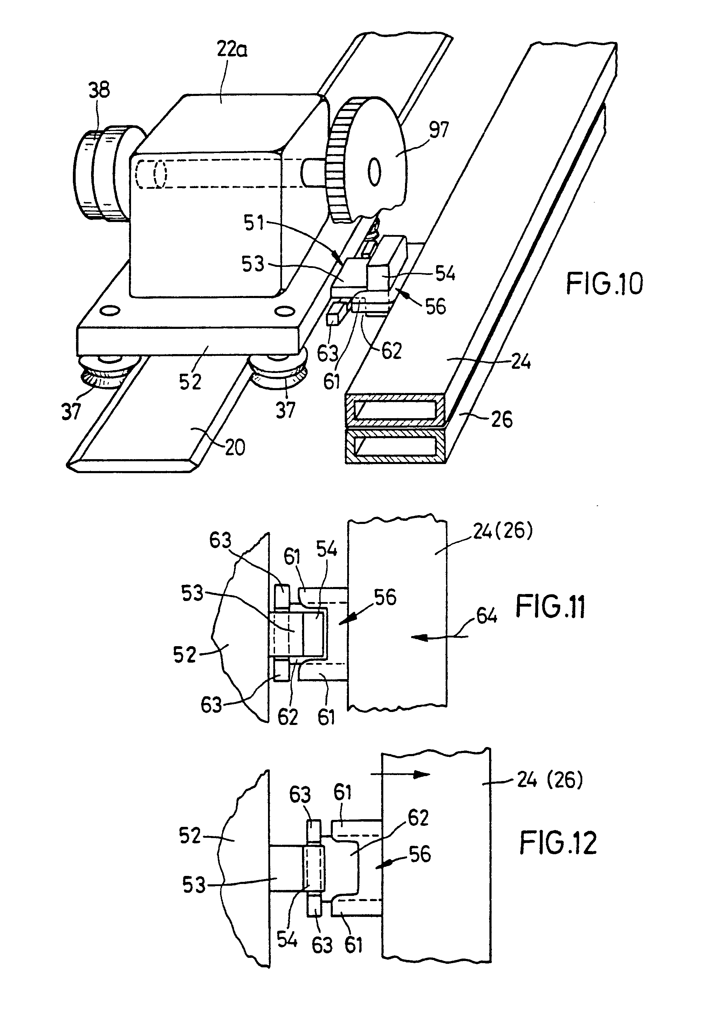

Die Mitnehmer 57b und 57c sowie 59a - 59d der Mitnehmerleisten 26 bzw. 25 bestehen aus jeweils einem von der zugehörigen Mitnehmerleiste sich in Richtung auf den Objektträger erstreckenden Steg 62, an dessen freiem Ende zwei nach oben gerichteten Vorsprünge 63 angeordnet sind, deren ggf. von außen nach innen abnehmender Abstand voneinander auch so bemessen ist, daß sie den Flansch 54 des Fortsatzes 51 am Objektträger passend zwischen sich aufnehmen können. Insbesondere die Fig. 9 - 12 lassen erkennen, daß die horizontale Erstreckung der Mitnehmer in Richtung auf den. Fortsatz 51 des Objektträgers unterschiedlich ist mit dem Ergebnis, daß Mitnehmer einer Leiste 24 oder 27 sich im Eingriff mit Fortsätzen 51 jeweils gegenüberliegender Objektträger befinden, wohingegen die Mitnehmer der anderen jeweils zugehörigen Leiste 26 bzw. 25 außer Eingriff sind. Bei der Lage der Teile gemäß Fig. 1 und 12 sind die mit den nach oben gerichteten Vorsprüngen versehenen Mitnehmer 57a bis 57c der Leiste 26 und die analog ausgebildeten Mitnehmer 29a - 29d der Leiste 25 mit den jeweiligen Vorsprüngen 51 in Eingriff, wohingegen sich die gabelartigen, lediglich horizontal verlaufenden Mitnehmer der beiden Leisten 24 und 27 außer Eingriff mit den jeweilige Fortsätzen 51 befinden.

Um die Mitnehmer mit den Fortsätzen der Objektträger in und außer Eingriff zu bringen, sind die aus den Mitnehmerleisten 24, 25 bzw. 26, 27 und den jeweils zugehörigen Verbindungselementen 28 bzw. 29 mit Führungsrollen 41 bestehenden Rahmen sowie Zahnstangen 46 bzw. 47, Zahnrad 49 und der Tragbalken 44 zu einer Baueinheit zusammengefaßt, die in horizontaler Ebene in Richtung der Pfeile 64 und 65 (Fig. 1), hin- und herbewegbar ist. Die Wegstrecke dieser Hin- und Herbewegungen ist relativ kurz. Sie entspricht etwa dem Abstand in der Bewegungsebene zwischen den Vorsprüngen 61 der Mitnehmer 56a bis 56e bzw. 58a bis 58d einerseits und den Vorsprüngen 63 der Mitnehmer 57a bis 57c bzw. 59a bzw. 59d andererseits.

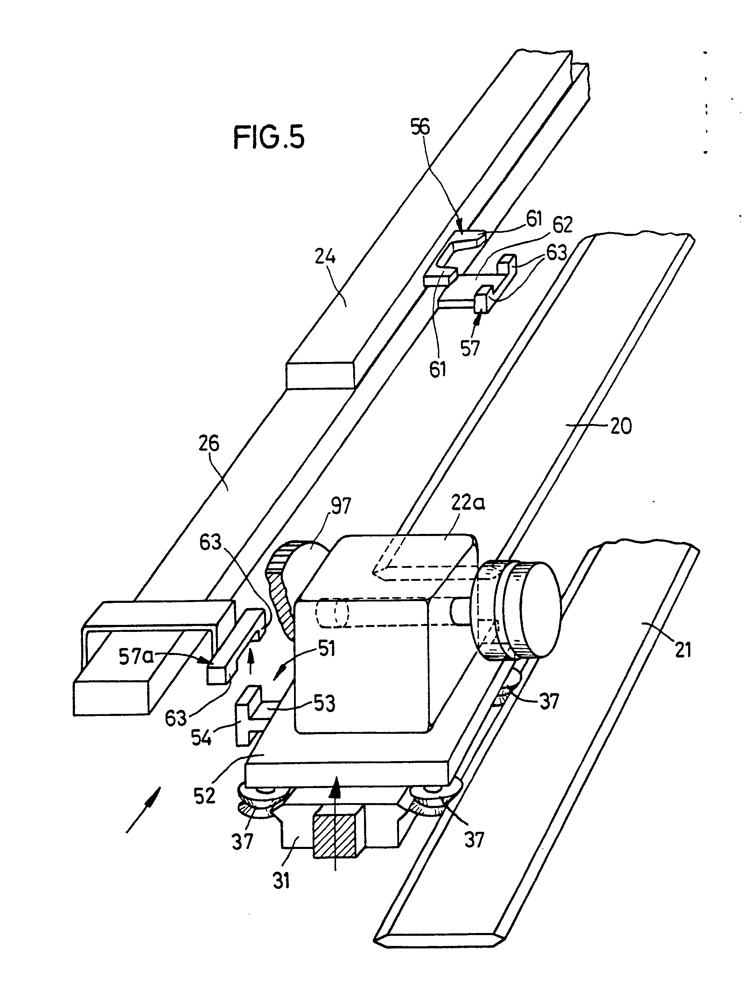

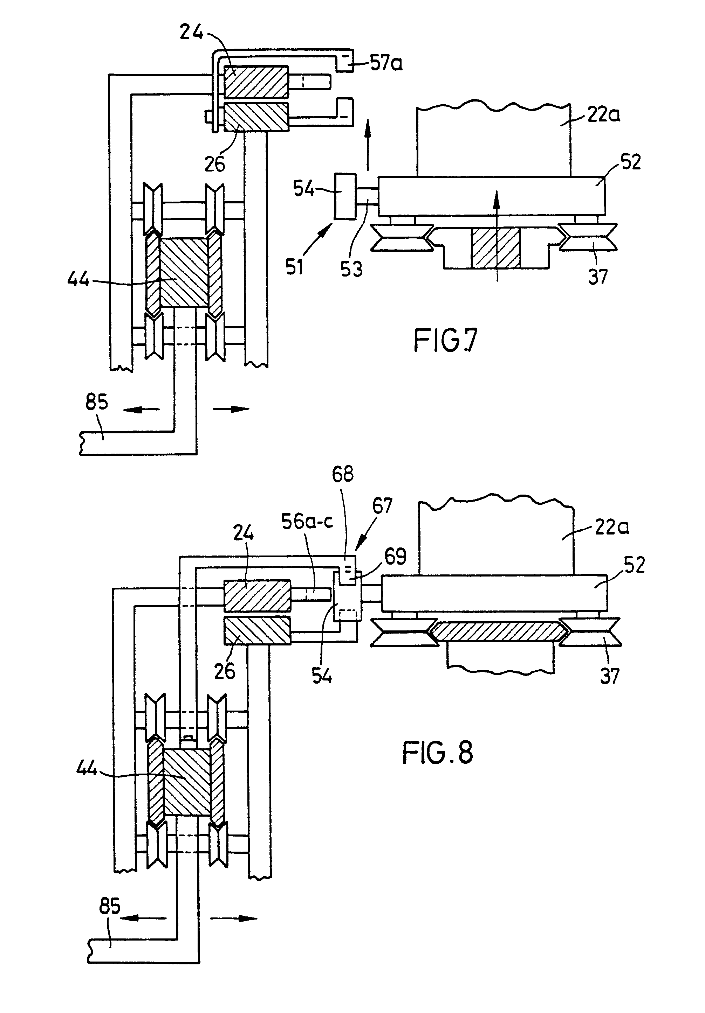

Die relative Zuordnung der Mitnehmer der beiden jeweils zusammenwirkenden Mitnehmerleisten 24 und 26 bzw. 27 und 25 ist insbesondere den Darstellungen der Fig. 5 bis 12 zu entnehmen. In den Fig. 10 und 11 befinden sich die Mitnehmerleisten in inrer in Richtung auf die Abschnitte 20, 21 der Führungsbahn, also in Richtung des Pfeiles 64 der Fig. 1 vorgeschobenen Position, bei welcher die horizontalen Vorsprünge 61 der Mitnehmer der Mitnehmerleiste 24 seitlich den Flansch 54 des Fortsatzes 51 des jeweils gegenüberliegenden Objektträgers 22a -x auf dem Abschnitt 20 umgreifen. In dieser vorgeschobenen Lage aller Mitnehmerleisten 24, 26 sowie 27, 25 befindeten sich die Mitnehmer 57a - c der Leiste 26 im Bereich des Steges 53 des jeweils gegenüberliegenden Objektträgers 22a -x. Die nach oben gerichteten Vorsprünge 63 dieser Mitnemer 57a - c sind so bemessen, d. h. so kurz, daß sie den Steg 53 nicht umfassen. D. h., daß bei einer Bewegung der Leiste 26 in Richtung der Pfeile 40 odek 41 die Mitnehmer 57a - c unter den Stegen 53 der jeweils im Bewegungsbereich befindlichen Objektträger 22a - x hindurchbewegt werden, ohne mit diesen in Berührung zu kommen. Somit erfolgt dabei auch keine Mitnahme von Objektträgern durch die Mitnehmer 57b und c. Vielmehr sind in dieser, in Richtung des Pfeiles 64 (Fig. 1) vorgeschobenen Lage der Mitnehmerleisten Mitnehmer 56a -e gemäß der Darstellung der Fig. 8 und 9 in Eingriff mit den Flanschen 54 von auf dem Abschnitt 20 befindlichen Objektträgern 22a - 22x, so daß eine Bewegung der Mitnehmerleiste 24 eine Mitnahme jener Objektträger 22a - 22x zur Folge hat, die sich in Eingriff mit jeweils einem der Mitnehmer 56a - 56c befinden.

Eine Bewegung der aus den Mitnehmerleisten 24, 25, 26, 27, den zugehörige Verbindungselementen 28, 29 und dem Tragbalken 24 bestehenden Baueinheit weg von der Führungsbahn also in Richtung des Pfeiles 65 der Fig. 1, hat zur Folge, daß die Teile die z. B. die in den Fig. 1, 5, 6 und 12 der Zeichnung dargesllte Lage einnehmen, bei welcher nunmehr die Vorsprünge 63 von Mitnehmern 57a - c sich im Eingriff mit den Flanschen 54 jeweils eines Objektträgers 22a - 22x befinden, so daß bei einer entsprechenden Bewegung der Mitnehmerleiste 26 eine Mitnahme dieser Objektträger erfolgt. Insbesondere Fig. 1 und 12 lassen erkennen, daß 35 sich die Mitnehmer 56a - b der Mitnehmerleiste 24 seitlich neben den Flanschen 54 der Objektträger 22a - x befinden, also nicht in den Bewegungsbereich der Flansche oder irgendeines anderen Teils der Fortsätze hineinragen.

Entsprechendes gilt auch für das Zusammenwirken der Mitnehmer der beiden unteren Mitnehmerleisten 25 und 27 mit den auf dem Abschnitt 21 befindlichen Objektträgern. Die beiden Mitnehmerleisten 25, 27 werden synchron mit der jeweils zugehörigen oberen Mitnehmerleiste 24 bzw. 26 bewegt, wobei jedoch die Mitnehmer der Mitnehmerleiste 25 bzw. 27 in Eingriff sind, wenn die Mitnehmer der jeweils zugehörigen oberen Mitnehmerleiste 24 und 26 außer Eingriff sind und umgekehrt, da der Transport der Objektträger 22a -x auf dem unteren Abschnitt 21 in entgegensetzter Richtung 41, also bezogen auf die Bewegung auf dem Abschnitt 20 in Richtung des Pfeiles 40, beim Rückhub in Richtung des Pfeiles 41 erfolgt. Aus diesem Grunde sind auch die Mitnehmer beider Mitnehmerleisten jedes Rahmens unterschiedlich ausgebildet.

Vorstehend ist erläutert worden, daß aufgrund der gewählten Verbindung zwischen dem Zahnrad 49 einerseits und den jeweils zu einem Rahmen zusammengefaßten Mitnehmerleisten 24 und 25 einerseits sowie 26 und 27 andererseits über die Zahnstangen 46 und 47 eine gegenläufige Bewegung der beiden Rahmen erfolgt mit dem Ergebnis, daß auch die beiden jeweils benachbarten Mitnehmerleisten 24 und 26 bzw. 27 und 25 gegenläufige Bewegungen in Richtung der Pfeile 40 und 41 ausführten. Diese Bewegungen dienen dem absatzweise Transport der Objektträger 22a - x. Hingegen führen alle Mitnehmerleisten 24, 25 sowie 26, 27 die quer zu den Tansportbewegungen 40, 41 erfolgenden Bewegungen in Richtung der Pfeile 64 und 65 zwecks In- und Außereingriffbringen der Mitnehmer 56a - e, 57a - c, 58a - d und 59a - 59d mit den Fortsätzen 51 der Objektträger 22a -22x synchron aus.

Weiterhin sind an den Stellen des Abschnittes 20 der Führungsbahn Feststellelemente 67 in den Stationen vorgesehen, in denen die Objektträger 22a - 22x zwischen zwei aufeinanderfolgenden Transportschritten der Mitnehmerleisten ihre Lage nicht verändern, wobei in dieser Station die Objekte behandelt, z. B. getrocknet werden können. Diese Feststellelemente 67 werden auch vom Träger 44 getragen. Sie machen die Hin- und Herbewegungen in Richtung der Pfeile 64 und 65 mit, ohne jedoch an den gegenläufigen Bewegungen der Mitnehmerleisten 24 - 27 in Richtung der Pfeile 40 und 41 teilzunehmen. Jedes Feststellelement 67 ist ähnlich den Mitnehmern an den Mitnehmerleisten 25 und 26 ausgebildet. Es besteht im wesentlichen aus einem Steg 68, von dem aus sich zwei sich zu einer Gabel ergänzende Vorsprünge 69 nach unten erstrecken, deren Abstand, wie bei den Vorsprüngen 63 der vorerwähnten Mitnehmer 57b - c und 59a - c, den Abmessungen der Flansche 54 der Fortsätze 51 an den Objektträgern 22a -22x angepaßt ist. Bei dem in der Zeichnung dargestellten Ausführungsbeispiel sind diese Feststellelemente 67 lediglich dem oberen Abschnitt 20 zugeordnet, da nur hier Behandlungsstationen für die Objekte 30 vorgesehen sind. Ferner fluchten die Vorsprünge 69 der Feststellelemente mit den Vorsprüngen 63 der Mitnehmer 57a - 57c, so daß die Feststellelemente dann mit dem jeweils zugeordneten Objektträger 22a bzw. 22x bzw. dessen Flansch 54 in Eingriff sind, wenn die Mitnehmer 56a - e außer Eingriff mit diesen sind. Daraus ergibt sich, daß im Bereich des jeweiligen Feststellelementes 67 ein Mitnehmer an der Mitnehmerleiste 26 fehlt bzw. die Mitnehmer an dieser Leiste im Bereich des Feststellers in einem größeren Abstand angeordnet sind, da das Feststellelement 67 dann seine wirksame, einen Objektträger festlegende Position einnimmt, wenn auch die an der Mitnehmerleiste 26 befindlichen Mitnehmer 57a - c ihre wirksame, eine Mitnahme bewirkende Position einnehmen. Wenn hingegen die Feststellelemente 67 so angeordnet wären, daß sie mit den Mitnehmern der Mitnehmerleiste 24 fluchten, wäre die Anordnung umgekehrt zu treffen, also derart, daß die Mitnehmer der Mitnehmerleiste 24 im jeweiligen Bereich einen größeren Abstand voneinander aufweisen. Andererseits sind die Mitnehmer an der Mitnehmerleiste, deren Mitnehmer nicht mit dem Feststellelementen fluchten, im gereich der letzteren in einem den von beiden Leisten ausgeführten Huben entsprechenden kürzeren Abstand anzuordnen.

Der Antrieb der Vorrichtung erfolgt über ein zentrales Getriebe 70, dem ein in der Zeichnung nicht dargestellter E-Motor 70 zugeordnet ist. Eine der Abtriebswellen dieses Getriebes 70 trägt einen Kurbelarm 71, an dessen freiem Ende eie Rolle 72 angebracht ist. Letztere befindet sich im Eingriff mit einer vertikalen Führung 73, die an einem Schlitten 74 angebracht ist. Letzterer ist an horizontalen Holmen 75 geführt. Eine Drehbewegung des Kurbelarmes 71 hat demzufolge Hin- und Herbewegungen des Schlittens 74 in Richtung der Pfeile 40 und 41 zur Folge.

Der Schlitten 74 ist an seiner den Abschnitten 20 und 21 zugekehrten Seite mit einem fest angebrachten Arm 75 versehen, dessen dem Schlitten 79 abgekehrter Endabschnitt 76 gabelförmig ausgebildet oder mit einem Langloch versehen und mit einem Stift 77 in Eingriff ist, der am Verbindungselement 28 der beiden Mitnehmerleisten 24 und 25 fest agebracht ist. Durch den Arm 75 und den Stift 77 wird die hin- und hergehende Bewegung des Schlittens 74 auf den von de Teilen 24, 25 und 28 gebildeten Rahmen und von dort über die Zahnstange 46 auf das Zahnrad 49 übertragen, welches seinerseits den von den beiden Mitnehmerleiste 236 und 27 und den Verbindungselementen 29 gebildeten Rahmen antreibt.

Das zentrale Getriebe 70 ist weiterhin über jeweils eine Kardanwelle 78 mit zwei Getrieben 79 verbunden, von denen jedes nahe jeweils einem Ende der Vorrichtung angeordnet ist. Auf der Abtriebswelle jedes dieser beiden Getriebe 79 sind zwei Kurvenscheiben 80, 81 befestigt, von denen die Kurvenscheibe 80 über einen Abtriebshebel 82 und eine Welle 82a mit anschließendem Gestänge 83 die Auf- und Abwärtsbewegungen der Halterungen 33 bzw. 34 für die Teilabschnitte 31 und 32 zwischen den beiden Abschnitten 20 und 21 der Führungsbahn bewirken.

Der anderen Kurvenrolle 81 ist ein Abtriebsglied 84 zugeordnet, welches über eine Traverse 85 die Hin- und Herbewegungen der die Teile 24 - 27 sowie 28 und 29 und 49 einschließenden Baueinheit in Richtung der Pfeile 64 und 65 (Fig. 1) bewirkt. Langloch bzw. Gabel 76 im vom Schlitten 74 getragenen Arm 75 dienen dazu, den damit in Eingriff stehenden Stift 77 diese Hin- und Herbewegungen zu ermöglichen.

Aufgrund der vorbeschriebenen Ableitung der einzelnen Antriebsmittel vom Zentralgetriebe 70 ist eine Abstimmung der von den einzelnen Teilen der Vorrichtung ausgeführten Bewegungen ohne weiteres möglich, ohne daß dazu komplizierte Steuereinrichtungen oder dgl. notwendig sein würden.

Im folgenden wird die Arbeitsweise der Vorrichtung anhand der Fig. 1 - 13A, B erläutert.

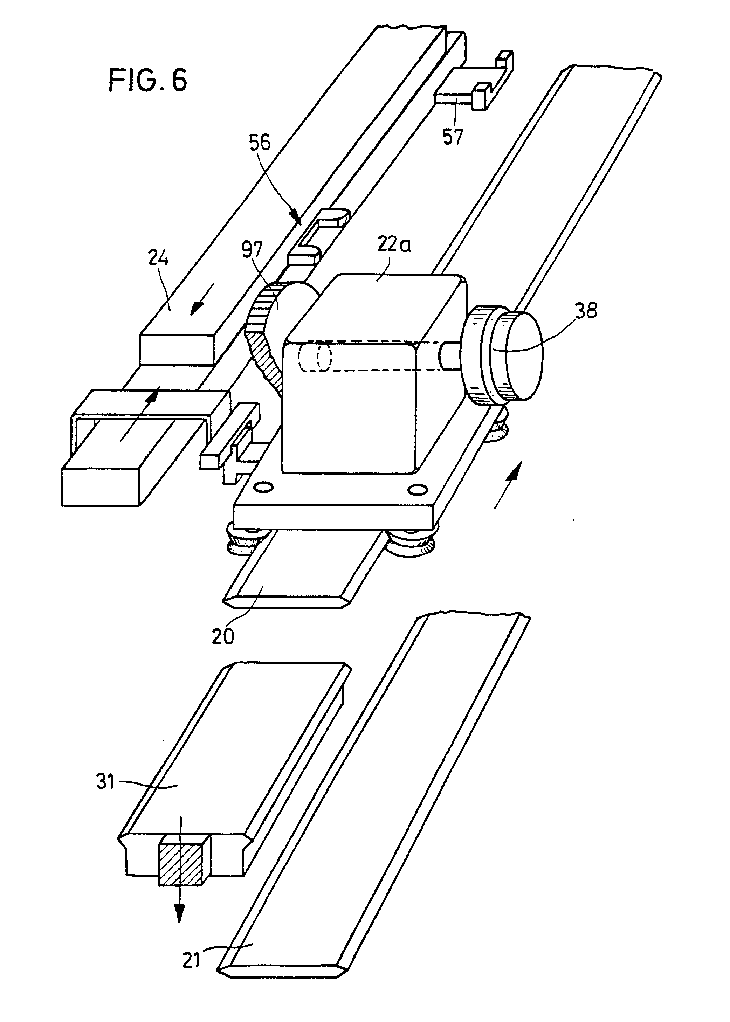

Es sei angenommen, daß die Objektträger 22a - x mit den daran befindlichen Objekten 30 auf dem oberen Abschnitt 20 der Führungsbahn von links nach rechts, also in Richtung des Pfeiles 40 transportiert werden und alle Behandlungsstationen der Vorrichtung diesem oberen Abschnitt und damit den Mitnahmeleisten 24, 26 zugeordnet sind, so daß auf dem unteren Abschnitt 21 die Objektträger 22a - x von rechts nach links, also in Richtung des Pfeiles 41 lediglich wieder in die Ausgangsposition zurückgebracht werden, wobei sie am Ende der Bewegung entlang der unteren Führungsbahn durch den Teilabschnitt 31 vom unteren auf das Niveau des oberen Abschnittes 20 angehoben werden. In Fig. 5 und 7 ist der Teilabschnitt 31 mit dem Objektträger 22a im Verlauf der Aufwärtsbewegung kurz unterhalb des obere Abschnitts 20 dargestellt. Die Mitnehmerleisten 24 - 27 nehmen in dem Augenblick, in welchem die Aufwärtsbewegung des Teilabschnittes 31 beendet ist, die in Fig. 13A dargestellte Lage ein. D. h., der die beiden Mitnehmerleisten 26 und 27 aufweisende Rahmen befindet sich in der linken Endlage, wohingegen sich der aus den beiden Mitnehmerleisten 24 und 25 bestehende Rahmen in der rechten Endlage befindet. In der von der Mitnehmerleiste 26 eingenommenen Position befindet sich deren am weitesten links befindliche Mitnehmer 57a in der Postion I, in welcher sich auch der Objektträger 22a am Ende des Aufwärtshubes des Teilabschnittes 31 befindet (Fig. 6 und 8). Mitnehmer 57a und der Fortsatz 51 des Objektträgers 22a bzw. dessen Flansch 53 sind in dieser Lage der Teile so zueinander angeordnet, daß eine Bewegung der aus den Mitnehmerleisten 24 - 27 bestehenden Baueinheit in Richtung des Pfeiles 64 (Fig. 1) dazu führt, daß Mitnehmer 52a und Flansch 54 in Eingriff miteinander kommen. Im in der Zeichnung dargestellten Fall ist der Mitnehmer 57a abweichend von den Mitnehmern 57b und 57c der Mitnehmerleiste 26, analog dem Feststellelement 67 ausgebildet. D. h., daß er eine nach unten offene Gabel darstellt, die oberhalb des Steges 53 des Fortsatzes 51 endet. Auf diese Weise besteht die Möglichkeit, daß die die Mitnehmerleisten 24 - 27 aufweisende Baueinheit bereits die in Richtung des Pfeiles 64 (Fig. 1) vorgeschobene, also den Abschnitten 20, 21 zugekehrte Position einnimmt, wenn der Objektträger 22a am Ende der Aufwärtsbewegung des Teilabschittes 31 in die Position I auf dem Niveau des Abschnittes 20 gelangt (Fig. 6 und 8), so daß der Flansch 54 des Fortsatzes 51 des Objektträgers 22a im Zuge dieser Aufwärtsbewegung (Fig. 5 und 7) mit dem Mitnehmer 57a in Eingriff kommt. Sofort nach Erreichen der Position 1 bzw. der Lage gemäß Fig. 6 und 8 werden die beiden Rahmen 26, 27, 29 sowie 24, 25, 28 gegenläufig verschoben, wobei sich der Rahmen 26, 27, 29, also auch die Mitnehmerleiste 26, in Richtung des Pfeiles 40 und der Rahmen 24, 25, 28 in Richtung des Pfeiles 41 bewegen, bis sie die in Fig. 11B dargestellte Endposition erreicht haben, in welcher sich der Objektträger 22a in der Station II befindet, in welcher der Mitnehmer 57a der Mitnehmerleiste 26 und der am weitesten links befindlich Mitnehmer 56a der Mitnehmerleiste 24 einander gegenüberliegen. Sie nehmen zunächst die relative Stellung zueinander ein, die beispielsweise in den Fig. 1 und 12 der Zeichnung dargestellt ist, allerdings mit dem Unterschied, daß der dort dargestellte Mitnehmer der Mitnehmerleiste 26 umgekehrt angeordnet ist und eine nach oben offene Gabel darstellt. Sofort nach Erreichen der Station II wird die die Teile 24, 26, 27, 25 aufweisende Baueinheit in Richtung des Pfeiles 64 verschoben mit dem Ergebnis, daß nunmehr der Mitnehmer 56a der Mitnehmerleiste 24 in Eingriff mit dem Flansch 54 kommt. Gleichzeitig wird der Mitnehmer 57a in eine unwirksame Lage verschoben, die jener gemäß Fig. 9 der Zeichnung entspricht, in welcher er außerhalb der Bewegungsbahn des Fortsatzes 51 liegt.

Bei der darauffolgenden Bewegung der beiden Rahmen 24, 25, 28 bzw. 26, 27, 29 in Richtung der Pfeile 40 bzw. 41 wird der Objektträger 22a durch den Mitnehmer 56a in die Station III verschoben, wobei gleichzeitig der Mitnehmer 57a leer in die Station I zurückführt. In der Station III liegen nunmehr der Mitnehmer 56a der Mitnehmerleiste 24 und der Mitnehmer 57b der Mitnehmerleiste 26 einander gegenüber, wie dies Fig. 13A zeigt. Eine nunmehr erfolgende Bewegung der Baueinheit in Richtung des Pfeiles 65 (Fig. 1) hat zur Folge, daß der Mitnehmer 56a außer Eingriff und gleichzeitig Mitnehmer 57b mit dem Flansch 54 in Eingriff kommen, so daß die resultierenden Positionen denen der Fig. 1 und 12 entsprechen. Im Verlauf der anschließenden Bewegung der Mitnehmerleiste 26 in Richtung des Pfeiles 40, bei der gleichzeitig eine gegenläufige Bewegung der Mitnehmerleiste 24 in Richtung des Pfeiles 41 erfolgt, gelangt der Objektträger 22a in die Station IV, wobei am Ende der beiden Bewegungen der Mitnehmer 57b der Mitnehmerleiste 26 und der zweite Mitnehmer 56b der Mitnehmerleiste 24 einander gegenüberliegen. Durch Verschiebung der Baueinheit in Richtung des Pfeiles 64 (Fig. 1) wird der Flansch 54 durch den Mitnehmer 57b freigegeben und gleichzeitig der Mitnehmer 56b in Eingriff mit dem Flansch 54 gebracht. Im Zuge der darauffolgenden Bewegung der Mitnehmerleiste 24 in Richtung des Pfeiles 40 gelangt der Objektträger 22a in die Station V (Fig. 13A).

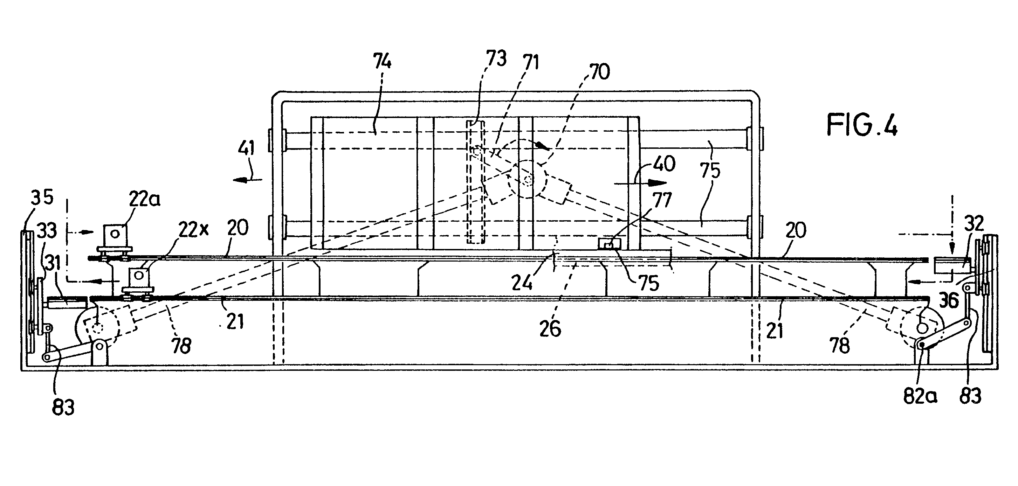

Der Transport durch die Übergabestationen II - IV erfolgt bei dem in den Fig. 13A + 13B dargestellten Ausführungsbeispiel in der Weise, daß jeweils eine Übergabe von einem Mitnehmer der Mitnehmerleiste 26 an einen Mitnehmer der Mitnehmerleiste 24 stattfindet und umgekehrt. D. h., daß die Verweildauer in den einzelnen Übergabestationen nicht länger zu sein braucht als notwendig ist, um jeweils die Bewegungen der Baueinheit in Richtung der Pfeile 64 bzw. 65 durchzuführen, so daß im Ergebnis ein etwa sinusförmiger Bewegungsablauf erfolgt. In der Übergabestation V ist bei dem in der Zeichnung dargestellten Ausführungsbeispiel die Situation insofern anders, als dort dem Mitnehmer 56b der Mitnehmerleiste 24 kein entsprechender Mitnehmer der Mitnehmerleiste 26 gegenüberliegt. D. h., daß nach Freigabe des Objektträgers 22a durch entsprechende Bewegung der Baueinheit in Richtung des Pfeiles 65 (Fig. 1) im Gegensatz zu den vorangegangenen Stationen II - IV der Objektträger nicht von einem anderen Mitnehmer übernommen wird. Somit bleibt der Objektträger 22a bei der anschließenden Bewegung der beiden Rahmen 24, 25, 28 und 26, 27, 29 in Richtung der Pfeile 41 bzw. 40 in der Station V. Am Ende dieses Hubes der Mitnehmerleiste 24 in Richtung des Pfeiles 41 gelangt deren Mitnehmer 56c in die Station V (Fig. 13B), wo er durch Verschiebung der Baueinheit in Richtung des Pfeiles 64 (Fig. 1) mit dem Objektträger 22a bzw. dessen Flansch 54 in Eingriff gebracht wird. Erst beim drauffolgenden Rückhub der Mitnehmerleiste 24 in Richtung des Pfeiles 40 erfolgt ein Weitertransport des Objektträgers 22a in die Station VI (Fig. 13A), in der wiederum ein Mitnehmer 57c der Mitnehmerleiste 26 des anderen Rahmens sich in einer Position befindet, in welcher er nach Verschieben der Baueinheit in Richtung des Pfeiles 65 und Freigabe des Flansches 54 durch den Mitnehmer 56c den Mitnehmer 57c erfaßt. Die darauffolgende Bewegung der Mitnehmerleiste 26 in Richtung des Pfeiles 40 bringt den Objektträger in die Station VII, in welcher, wiederum nach einem gegenläufigen Hub in Richtung des Pfeiles 41 der Mitnehmerleiste 24, deren letzter Mitnehmer 56c dem Flansch 54 des Objektträgers 22a gegenüberliegt, so daß eine erneute Querverschiebung der Baueinheit in Richtung des Pfeiles 64 (Fig. 1) nunmehr den Mitnehmer 56c in Eingriff mit dem Flansch 54 unter gleichzeitiger Freigabe desselben durch den Mitnehmer 57c der Mitnehmerleiste 26 bringt. Bei der darauffolgenden Hubbewegung der letzteren in Richtung des Pfeiles 40 gelangt der Objektträger 22a in die Station VIII. Fig. 13A läßt erkennen, daß hier eine der Station V entsprechende Situation ist derart, daß kein Mitnehmer der Mitnehmerleiste 26 am Ende von deren Hubbewegung in Richtung des Pfeiles 41 dem Objektträger 22a gegenüberliegt, so daß nach Freigabe desselben durch Verschieben der Baueinheit in Richtung des Pfeiles 65 (Fig. 1) keine Übernahme durch einen anderen Mitnehmer erfolgt. D. h., daß bei den folgenden Hubbewegungen der Mitnehmerleisten 24 und 26 in Richtung der Pfeile 41 bzw. 40 der Objektträger 22a in der Station VIII bleibt. Am Ende des vorerwähnten Hubes befindet sich der letzte Mitnehmer 56e der Mitnehmerleiste 24 in der Station VIII (Fig. 13B). Durch eine erneute Verschiebung des Gesamtsystems in Richtung des Pfeiles 64 wird der Mitnehmer 56e mit dem Objektträger 22a bzw. dessen Flansch 54 in Eingriff gebracht, so daß bei der darauffolgenden Hubbewegung der Mitnehmerleiste 24 in Richtung des Pfeiles 40 der Objektträger 22a in die Station IX gebracht wird, in welcher er sich auf dem zweiten Teilabschnitt 32 befindet, der nach unten auf das Niveau des unteren Abschnittes 21 und zurückbewegbar ist (vgl. Fig. 4).

In den Übergangsstationen II, III, IV, VI und VII erfolgt im Augenblick der Freigabe des Objektträgers durch den jeweils beim vorangegangenen Transportschritt wirksam gewesenen Mitnehmer die Übernahme durch den Mitnehmer, der den folgenden Transportschritt bewirkt. D. h., daß in ddiesen Übergabestationen der Objektträger niemals frei und somit unkontrolliert bewegbar ist. Da diese Voraussetzung in den Stationen V und VIII nicht erfüllt ist, sind dort die bereits erwähnten Feststellelemente 67 vorgesehen, die im Augenblick der Freigabe des Objektträgers durch den jeweiligen Mitnehmer 56b bzw. 56d mit dem Flansch 54 des Objektträgers 22a in Eingriff gebracht werden und diesen in seiner Lage sichern, bis im Zuge des übernächsten Tansporthubes der Weitertransport des Objektträgers 22a erfolgt. Hierbei erfolgt die Freigabe durch das Feststellelement 67 in dem Augenblick, in dem der jeweils den folgenden Transporthub bewirkende Mitnehmer 56c bzw. 56e mit dem Flansch 54 in Eingriff gebracht wird.

Der schrittweise Vortransport der Objektträger 22a - x wird in dem vorbeschriebenen Ausführungsbeispiel auf zweierlei Weise bewirkt, nämlich einmal durch unmittelbare Übergabe jedes Objektträgers vom Mitnehmer der einen Mitnehmerleiste an den Mitnehmer der anderen, damit zusammenwirkenden Mitnehmerleiste, so daß bei jedem Hub, der von den beiden Mitnehmerleisten - gegenläufig - ausgeführt wird, der Objektträger um einen Schritt, welcher der Größe des von den Mitnehmerleisten ausgeführten Hubes entspricht, weitertransportiert wird. Andererseits können zwei aufeinanderfolgende Transportschritte durch zwei aufeinanderfolgende Mitnehmer derselben Mitnehmerleiste bewirkt werden, so daß der Objektträger während des Hubes dieser Mitnehmerleiste entgegen der Transportrichtung in seiner Position verbleibt. Auf diese Weise ist es möglich, den Transport des Objektträgers mit dem daran befindlichen Objekt durch die Vorrichtung an die jeweiligen Erfordernisse anzupassen. Es ist lediglich notwendig, die Mitnehmer auf den Mitnehmerleisten entsprechend anzuordnen. So ist der Abstand zwischen den beiden Mitnehmern 56b und 56c bzw. 56d und 56e nur halb so groß wie es dort der Fall ist, wo die Transportschritte des Objektträgers in unmittelbarer Aufeinanderfolge, also ohne eine Unterbrechung, erfolgen, die länger ist als für das Freigeben des Objektträgers durch den einen Mitnehmer und das Erfassen durch den anderen Mitnehmer erforderlich ist. Durch entsprechende verstellbare Anbringung der Mitnehmer kann somit die Vorrichtung an alle vorkommenden Bedarfsfälle angepaßt werden. So kann bei dem vorstehend beschriebenen Ausführungsbeispiel die Anordnung beispielsweise so getroffen sein, daß während des Transportes von der Station III zur der Station IV und von der Station VI zur Station VII das Objekt 30 bedruckt oder sonst wie dekoriert wird und in den Stationen V und VIII eine Trocknung des zuvor aufgebrachten Druckes erfolgt, z. B. unter Verwendung von UV-Strahlern. Das Bedrucken der Objekte kann ohne weiteres während eines Transportschrittes erfolgen. Dies hat sogar den Vorteil des geringeren Zeitaufwandes. Hingegen ist es einfacher und zweckmäßiger, den Trocknungsvorgang am ruhenden Objekt vorzunehmen, was natürlich nicht ausschließt, daß dieses während des Trocknungsvorganges um seine Achse rotiert wird. Die Vorrichtung gemäß der Erfindung gibt die Möglichkeit, für die einzelnen Behandlungsvorgänge die jeweils optimalen Voraussetzungen zu schaffen.

Der untere Abschnitt 21 der Führungsbahn dient bei dem vorbeschriebenen Ausführungsbeispiel lediglich dazu, die Objektträger in Richtung des Pfeiles 41 wieder in die Ausgangspostion zurückzutransportieren. Dabei können die Objekte in der Station 1 vom jeweils dort befindlichen Objektträger aufgenommen und in der Station IX vom Objektträger abgenommen werden. Es ist natürlich auch möglich, die Objekte bereits im unteren Abschnitt 21 in die Objektträger einzubringen und sie auch erst im Anschluß an die Station IX, also ebenfalls im Bereich des unteren Abschnittes 21 oder während des Transports nach unten durch den Teilabschnitt 32, abzunehmen.

Der Transport im Bereich des unteren Abschnittes 21 erfolgt durch die beiden Mitnehmerleisten 27 und 25. Die Figuren 13A und 13B der Zeichnung lassen erkennen, daß die Mitnehmer 58a, 58b, 58c und 58d der Leiste 27 und 59a, 59b, 59c und 59d der Leiste 25 so angeordnet sind, daß in jeder Übergabestation eine unmittelbare Übergabe von dem Mitnehmer der einen Leiste an den Mitnehmer der anderen Leiste und umgekehrt erfolgt, wobei - bezogen auf die Transportrichtung in der oberen Führungsbahn - jeweils der Rückhub der Mitnehmerleisten für den Transport der Objektträger in Richtung des Pfeiles 41 ausgenutzt wird. Es ist also keine Station vorhanden, in welcher der Objektträger während der Dauer eines Hubes verweilt, so daß die Anzahl der für einen bestimmten Anwendungsfall erforderlichen Objektträger so klein wie möglich gehalten werden kann. Das Zusammenwirken der beiden unteren Mitnehmerleisten 27 und 25 und deren Mitnehmer erfolgt in gleicher Weise wie bei den oberen beiden Mitnehmerleisten 24 und 26.

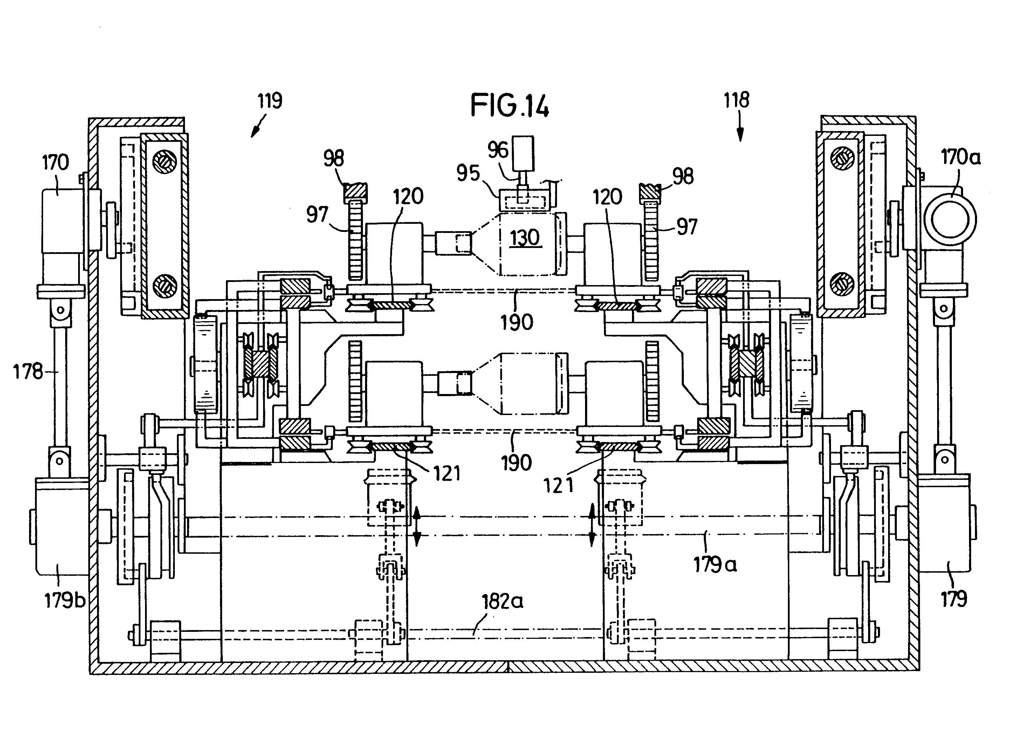

Es ist selbstverständlich möglich, auch im Bereich des unteren Abschnittes 21 Behandlungen an den Objekten durchzuführen. In diesem Fall würden die Objekte auch nach der Station IX noch im Objektträger verbleiben und erst im unteren Abschnitt 21, ggf. aber auch erst im oberen Abschnitt 20, entnommen werden. Die Verwendung des unteren Abschnittes für die Durchführung weiterer Behandlungsvorgänge bietet sich insbesondere dann an, wenn die Vorrichtung einseitig, also gemäß der Darstellung der Fig. 1 ausgebildet ist, wobei das zu behandelnde Objekt 30 durch die Halterung 38 nur von einem Ende abgestützt wird, weil dann die Transportbahn und die Einrichtungen der Behandlungsstationen seitlich zugänglich sind. Jedoch ist eine Verwendung des unteren Abschnitts der Transportbahn für die Durchführung von Behandlungsvorgängen auch dann möglich und vorteilhaft, wenn zwei einander gegenüberliegende Vorrichtungen gemäß Fig. 14 vorgesehen sind, die das zu behandelnde Objekt von beiden Seiten unterstützen. Letztenendes ist es für die Durchführung von Behandlungsvorgängen auch im unteren Abschnitt 21 nur erforderlich, den vertikalen Abstand zwischen beiden Abschnitte 20 und 21 groß genug zu wählen. Der damit verbundene Aufwand fällt nicht ins Gewicht.

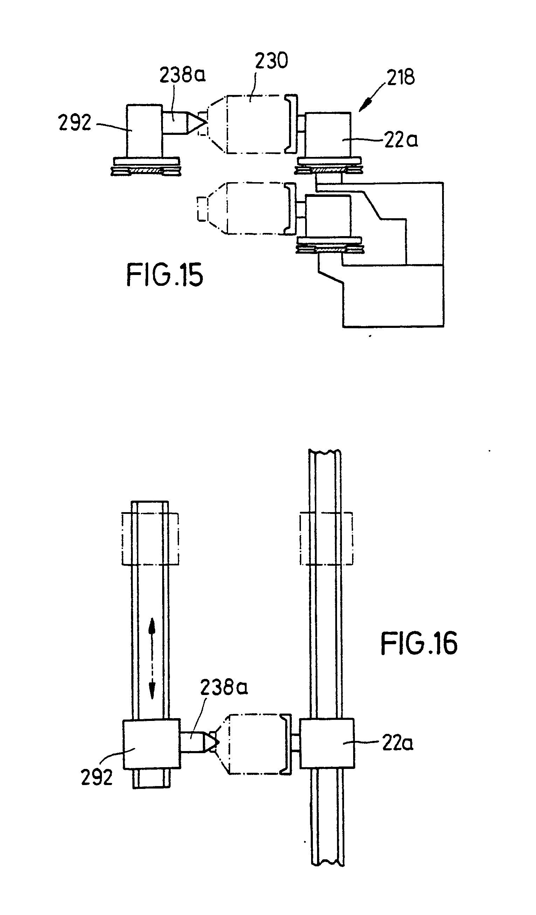

Das bereits erwähnte Ausführungsbeispiel gemäß Fig. 14 stellt lediglich eine Verdoppelung des vorstehend beschriebenen Ausführungsbeispiels gemäß den Fig. 1 - 13A, B dar mit der Ausnahme, daß der Motor 170a der rechts befindlichen Einheit 118 auch für den Antrieb der linken Einheit 119 verwendet wird. Zu diesem Zweck ist die Abtriebswelle 179a jedes der beiden an den Enden der rechten Einheit 113 befindlichen Getriebe 179 verlängert und mit dem jeweils entsprechenden Getriebe 179b der linken Einheit 119 verbunden, so daß über die Kardanwellen 178 der linken Einheit 119 auch deren zentrales Getriebes 170 angetrieben wird. Außerdem kann, wie in der Zeichnung dargestellt, die Welle 182a sich über beide Einheiten 118, 119 erstrecken, wenngleich dies nicht unbedingt erforderlich ist. Weiterhin besteht die Möglichkeit, die beiden jeweils ein Objekt 130 gemeinsam tragenden Objektträger 120 jeweils durch eine in Fig. 16 der Zeichnung gestrichelt dargestellte Traverse 190 miteinander zu verbinden, wenngleich auch dies im Hinblick auf die durch die Antriebsübertragungen zwangsläufig erfolgenden Synchronisierungen nicht erforderlich ist.

Beim Ausführungsbeispiel gemäß den Fig. 15 und 16 ist nur eine Einheit 218 vorgesehen, die lediglich schematisch angedeutet ist, wobei jedoch das zu dekorierende Objekt 230 in der Station, in der eine eine bestimmte Größe überschreitende Kraft auf das Objekt ausgeübt wird, z. B. beim Bedrucken oder Etikettieren, auch an der anderen gegenüberliegenden Seite unterstützt wird. Zu dem Zweck ist jeder derartigen Station eine zusätzliche Halterung 238a zugeordnet, die von einem lediglich im Bereich dieser Station hin- und herbewegbaren Schlitten 292 getragen wird, welcher mit den jeweils in der Behandlungsstation befindlichen Objektträger 220a synchron bewegbar ist, wenn die Halterung 238a in Eingriff mit dem Objekt 230 ist. Am Ende des jeweiligen Behandlungsschrittes wird die Halterung 238a aus dem Objekt 230 zurückgezogen und mit dem Schlitten 292 in die Ausgangsposition zurückbewegt. Dort wird die Halterung 238a durch ensprechende Verschiebung mit dem nächstfolgenden Objekt 230 in Eingriff gebracht.

Bei Verwendung der Vorrichtung als Siebdruckmaschine können die Antriebe für Siebdruckschablone 95 und Rakel 96 ebenfalls vom hin- und herbewegbaren Schlitten 74 abgeleitet werden. Dies gilt auch für das die Rotation des zu bedruckenden oder zu etikettierenden Objektes 30 bewirkende Zahnrad 97 oder für ein anderes, eine Bewegung des Objektes um seine Achse oder dazu parallele Achse bewirkendes Element. Der Schlitten kann beispielsweiee eine Zahnstange 98 antreiben, die in jeder Druckstation oder dgl. angeordnet und dort mit dem Zahnrad 57 des jeweils in dieser Station befindlichen Objektträgers kämmt.

Selbstverständlich ist die Vorrichtung gemäß der Erfindung auch für das Bedrucken, Etikettieren oder dgl. von flachen oder unregelmäßig geformten Objekten geeignet.

Abweichend von der Darstellung in den Zeichnungen brauchen die Abschnitte 20, 21 nicht unbedingt parallel zueinander zu verlaufen. Vielmehr ist es möglich, daß einer der oder beide Abschnitte 20, 21 gegenüber der Horizontalen geneigt verläuft bzw. verlaufen. Auch können die die Verbindung zwischen beiden Abschnitten herstellenden Teilabschnitte ggf. in zwei oder mehr Transportschritten bewegt werden. Dies kann z. B. dann zweckmäßig sein, wenn die Objekte jeweils in einen Objektträger eingeführt werden, der sich auf einem der Teilabschnitte befindet. Entsprechendes gilt auch für die Entnahme der fertig behandelten Objekte aus dem jeweiligen Objektträger.

Es ist auch möglich, die Bewegungsrichtungen umzukehren, beispielsweise derart, daß die Objektträger auf den oberen Abschnitt in Richtung des Pfeiles 40 und auf dem oberen Abschnitt in Richtung des Pfeiles 41 bewegt werden, ggf. mit der Folge, daß die Behandlungsstationen ausschließlich dem unteren Abschnitt 21 zugeordnet sind. In jedem Fall bleibt jener wesentliche Vorteil der Vorrichtung gemäß der Erfindung gewahrt, der darin besteht, daß jeder Objektträger auf beiden Abschnitten der Bahn und auch auf den sie verbindenden Teilabschnitten seine absolute Lage beibehält. D. h., daß bei den in der Zeichnung dargestellten Ausführungsbeispielen das Objekt immer von oben zugänglich ist und demzufolge die Behandlungsstationen auch im unteren Abschnitt oberhalb des Objektträgers angeordnet sind. Dies ist ein wesentlicher Vorteil gegenüber den bekannten mit umlaufenden Ketten versehenen Vorrichtungen, bei denen im Untertrum eine Umkehrung der Lage der Objektträger gegenüber ihrer Lage im Obertrum erfolgt, so daß allein aus diesem Grunde die Zuordnung von Behandlungsstationen zum Untertrum großen Schwierigkeiten begegnet. Der demgegenüber durch die Erfindung erzielte Vorteil trägt wesentlich zur vielseitigen Verwendbarkeit und auch Anpaßbarkeit der Vorrichtung gemäß der Erfindung bei.

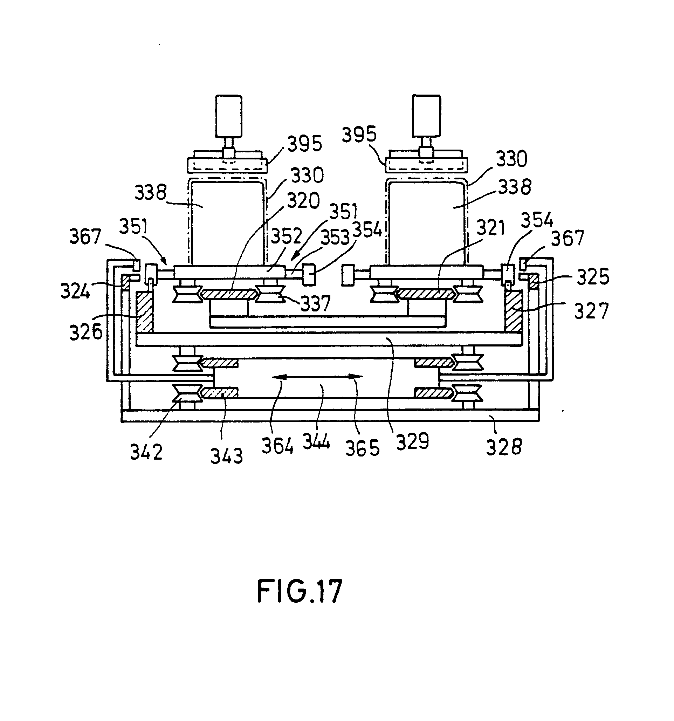

Letzteres gilt auch das Ausführungsbeispiel gemäß Fig. 17, welches im wesentlichen der Ausführungsform gemäß Fig. entspricht, wenn letztere um 90° verschwenkt wird und die beiden Abschnitte 20 und 21 der Führungsbahn dabei zusätzlich um 90° verschwenkt werden, damit sie ihre Lage in horizontaler Ebene beibehalten. Die in Fig. 17 verwendeten Bezugszeichen entsprechen denen der Fig. 1, sind jedoch jeweils um 300 größer. Der wesentliche Unterschied gegenüber allen anderen vorbeschriebenen Ausführungsformen besteht bei dem Ausführungsbeispiel gemäß Fig. 17 darin, daß die beiden Abschnitte 320, 321 der Führungsbahn nicht untereinander, sondern nebeneinander in derselben horizontalen Ebene verlaufen mit dem Ergebnis, daß die an den Enden der Abschnitte 320, 321 angeordneten, in Fig. 17 nicht dargestellte Teilabschnitte, die jeweils den Abstand zwischen den beiden Abschnitten 320, 321 überbrücken, in horizontaler Ebene hin- und herbewegbar sind.

Ein weiterer Unterschied gegenüber der Ausführungsform gemäß Fig. 1 besteht darin, daß die Grundplatten 352 der Objektträger an beiden einander gegenüberliegenden Seiten mit Fortsätzen 351 versehen sind, an denen die Mitnehmerleisten 324, 326 bzw. 325, 327 angreifen. Dies ergibt sich aus der gewählten Konstruktion, bei welcher die Mitnehmerleisten jeweils außenseitig an den Grundplatten 352 der Objektträger bzw. den daran angebrachte Fortsätzen 351 angreifen. Entsprechendes gilt für die Feststellelemente 367. Die Art des Zusammenwirkens der Mitnehmerleisten 324-327 sowie der Feststellelemente 367 mit den Fortsätzen 351 ist im übrigen so wie im Zusammenhang mit dem in Fig. dargestellten Ausführungsbeispiel beschrieben.

Ein zusätzlicher Unterschied gegenüber der Ausführungsform gemäß Fig. 1 besteht darin, daß die Halterungen 338 für die zu behandelnden Objekte 330 direkt an der jeweils zugehörigen Grundplatte 352 angebracht sind, so daß die Stirnflächen der zu bedruckenden Objekte 330, die zylindrisch ausgebildet sein können, nach oben weisen und im Flachdruck bedruckt werden. Es ist natürlich auch möglich, die Objektträger analog der Ausführung gemäß Fig. 1 auszubilden und mit seitlich angebrachten, ggf. rotierbaren Halterungen zu versehen, die das Bedrucken von an den Siegdruckschablonen 395 abwälzbaren Objekten ermöglichen.

Beim Ausführungsbeispiel gemäß Fig. 17 sind beiden Abschnitten 320 und 321 der Führungsbahn Druckstationen zugeordnet. Allerdings ist es auch hier möglich, die Druckstationen nur einem der beiden Abschnitte der Führungsbahn zuzuordnen und auf der anderen Führungsbahn lediglich die Objektträger zurückzuführen und ggf. andere, zusätzliche Behandlungen an den Objekten durchzuführen. Falls einer der beiden Abschnitte 320 und 321 lediglich der Rückführung der Objektträger dient, braucht an diesem Abschnitt analog der Fig. 1 kein besonderes Feststellelement vorgesehen zu sein.

Es ist ferner möglich, die beiden Abschnitte 320 und 321 zwar seitlich nebeneinander, jedoch bezüglich der Höhe zueinander versetzt anzuordnen derart, daß der eine der beiden Abschnitte höher liegt als der andere. Dies kann z. B. dann zweckmäßig sein, wenn die Vorrichtung im Betrieb nur von einer Seite zugänglich ist. Bei einer solchen Anordnung der Abschnitte 320 und 321 müßten die Teilabschnitte, die den Abstand zwischen den beiden Führungsbahnen überbrücken, in ihrer Bewegungsbahn auch eine entsprechende vertikale Komponente aufweisen.

Zur Erzielung einer besseren Zugänglichkeit kann es auch zweckmäßig sein, wenigstens ein Paar 324, 326 bzw. 325, 327 der Mitnehmerleisten zwischen den beiden Abschnitten 320, 321 der Führungsbahn anzuordnen. Entsprechendes gilt für das Feststellelement 377. Wenn nur ein Paar 324, 326 bzw. 325, 327 der Mitnehmerleisten zwischen den Abschnitten 320, 321 angeordnet ist, brauchen die mit den Mitnehmerleisten zusammenwirkenden Fortsätze 351 nur an einer Seite der Grundplatten 352 der Objektträger angebracht zu sein.

**Patentansprüche**

1. Vorrichtung zum Dekorieren von Objekten mit wenigstens einer Behandlungsstation für die Objekte, die jeweils an einem schrittweise auf einem umlaufenden Transportweg entlang einer Führungsbahn (20, 21, 31, 32; 120, 121; 320, 321)) transportierten Objekthalter angebracht und nach Passieren wenigstens einer Behandlungsstation von diesem Objektträger (22a-x) freigegeben werden, und mit wenigstens einem Transportmittel für die Objektträger, dadurch gekennzeichnet, daß die Objektträger (22a - x) lösbar mit dem hin- und herbewegbaren Transportmittel (24, 25, 26, 27; 324, 325, 326, 327) ) verbindbar sind und bei dessen Bewegung in Transportrichtung (40, 41) in Eingriff und bei dessen Bewegung entgegen der Transportrichtung (40, 41) außer Eingriff sind.

2. Vorrichtung nach Anspruch 1, dadurch gekennzeichnet, daß die Führungsbahn aus zwei Abschnitten (20, 21; 120, 121; 320, 321) besteht, die in einem Abstand voneinander angebracht sind, und der Abstand zwischen beiden Abschnitten (20, 21; 120, 121; 320, 321) der Führungsbahn durch hin- und herverschiebbare Teilabschnitte (31, 32) überbrückt wird.

3. Vorichtung nach Anspruch 2, dadurch gekennzeichnet, daß die Abschnitte (20, 21; 120, 121) ) der Führungsbahn einen vertikalen Abstand voneinander aufweisen und die Teilabschnitte (31, 32) vertikal hin- und herverschiebbar sind.

4. Vorrichtung nach Anspruch 3, dadurch gekennzeichnet, daß jedem Abschnitt (20, 21; 120, 121; 320, 321) der Führungsbahn ein Transportmittel in Form wenigstens einer hin- und herbewegbaren Mitnehmerleiste (24, 25, 26, 27; 324, 325, 326, 327) zugeordnet ist, die sich im wesentlichen parallel zum jeweiligen Abschnitt (20, 21; 120, 121; 320, 321) erstreckt und quer zu ihren den Transport der Objektträger (22a - x) bewirkenden Hubbewegungen hin- und herverschiebbar ist, um die Mitnehmerleiste in und außer Eingriff mit auf dem zugehörigen Abschnitt (20, 21) befindlichen Objektträgern (22a - x) zu bringen.

> 5. Vorrichtung nach Anspruch 4, dadurch gekennzeichnet, daß beide Mitnehmerleisten (24, 25; 26, 27; 324, 325, 326, 327) durch Verbindungselemente (28, 29; 328, 329) zu einem rahmenförmigen Bauteil verbunden sind und die eine Mitnehmerleiste (26, 27; 326, 327)) bei der Bewegung in der einen Richtung (40) mit Objektträgern (22a- x) des einen Abschnittes (20) der Führungsbahn und die andere Mitnehmerleiste (24, 25; 324, 325) ) bei der Bewegung in der anderen Richtung (41) mit Objektträgern (20a - x) des anderen Abschnittes (21) der Führungsbahn in Eingriff ist.

6. Vorrichtung nach einem der vorhergehenden Ansprüche, dadurch gekennzeichnet, daß jedem Abschnitt (20, 21; 120, 121; 320, 321) der Führungsbahn zwei Mitnehmerleisten (24, 26; 25, 27; 324, 326; 325, 327)) zugeordnet sind, die gegenläufig zueinander bewegbar sind.

7. Vorrichtung nach einem der vorhergehenden Ansprüche, dadurch gekennzeichnet, daß die beiden gegenläufig bewegbaren Mitnehmerleisten (24, 26; 25, 27) jedes Abschnittes (20, 21) übereinander angeordnet sind.

8. Vorrichtung nach Anspruch 6 oder 7, dadurch gekennzeichnet, daß die beiden jeweils gleichsinnig bewegten Mitnehmerleisten (24, 25; 26, 27; 324, 326; 325, 327) beider Abschnitte (20, 21; 320, 321) über Verbindungselemente (28, 29; 328, 329) ) zu einem rahmenförmigen Bauteil verbunden sind.

9. Vorrichtung nach einem der vorhergehenden Ansprüche, dadurch gekennzeichnet, daß die von den Mitnehmerleisten (24, 25; 26, 27; 324, 325; 326, 327) und den Verbindungselementen (28, 29; 328, 329) gebildeten beiden rahmenförmigen Bauteile von einem gemeinsamen Tragelement (44, 344 ) getragen sind, an welchem ein die Hin- und Herbewegungen in den Querrichtungen (64, 65; 364, 365) übertragendes Antriebsglied angreift.

10. Vorrichtung nach einem der vorhergehenden Ansprüche, dadurch gekennzeichnet, daß jeder Objektträger (22a - x) mit einem Fortsatz (51; 35) versehen ist, an dem die Mitnehmerleisten (24, 26; 25, 27; 324, 326; 325, 327) angreifen.

11. Vorrichtung nach einem der vorhergehenden Ansprüche, dadurch gekennzeichnet, daß an den Mitnehmerleisten (24, 25, 26, 27; 324, 325, 326, 327) ) Mitnehmer (56c - e, 59a - d, 57a - c, 58a - d) angebracht sind, über die die lösbaren Verbindungen mit den Objektträgern (22a - x) hergestellt werden können.

12. Vorrichtung nach einem der vorhergehenden Anspruüche, dadurch gekennzeichnet, daß wenigstens ein Teil der Mitnehmer (59a - d, 57a - c, 58a - d) an der sie jeweils tragenden Mitnehmerleiste (24, 25; 26, 27; 324, 325; 326, 327)) in Abständen voneinander angebracht sind, die dem von der jeweiligen Mitnehmerleiste (24, 25, 26, 27) ausgeführten Hub entsprechen.

13. Vorrichtung nach einem der vorhergehenden Ansprüche, dadurch gekennzeichnet, daß wenigstens ein Teil der Mitnehmer (56a - e, 59a - d, 57a - c, 58a - d) an der sie jeweils tragenden Mitnehmerleiste (24, 25, 26, 27; 324, 325, 326, 327) in Abständen voneinander angebracht sind, die dem Doppelten des von den Mitnehmerleisten ausgeführten Hubes entsprechen.

14. Vorrichtung nach Anspruch 11, dadurch gekennzeichnet, daß die Mitnehmer (56a - e, 57a - c, 58c -d, 59a - d) der jeweils demselben Abschnitt (20, 21; 120, 121; 320, 321) der Führungsbahn zugeordneten Mitnehmerleisten (24, 26; 27, 25; 324, 326, 327, 325) parallel zu den in den Querrichtungen (64, 65) erfolgenden Hin- und Herbewegungen unterschiedliche Längen aufweisen und die kürzeren Mitnehmer (56a - e; 58a - d) bei in Richtung auf die Objektträger (22a - x) vorgeschobener Endlage und die längeren Mitnehmer (57a - c, 59a - d) in der entgegengesetzten Endlage mit dem jeweiligen Fortsatz (51; 351) in Eingriff sind.

15. Vorrichtung nach einem der vorhergehenden Ansprüche, dadurch gekennzeichnet, daß in den Stationen, in welchen der Objektträger (22a - x) zwischen zwei Transportschritten während der Dauer eines Transportschrittes verweilt, ein den Objektträger (22a - x) in seiner Lage sicherndes Feststellelement (67, 36) angeordnet ist.

16. Vorrichtung nach einem der vorhergehenden Ansprüche, dadurch gekennzeichnet, daß die Objektträger (22a - x) die zu behandelnden Objekte (30, 330) nur einseitig halten und in wenigstens einer der Behandlungsstationen ein hin- und herbewegbares Stützteil (238a) vorgesehen ist, welches während der Behandlung das Objektes (230) dieses auch an seiner anderen Seite abstüzt, wobei dieses Stützteil (238a) bei seiner Bewegung in Richtung der des Objektträgers (22a-x) sich mit diesem synchron bewegt.

17. Vorrichtung nach einem der vorhergehenden Ansprüche, dadurch gekennzeichnet, daß zum Dekorieren von beidseitig gehaltenen Objekten (130) zwei in einem entsprechenden Abstand voneinander einander gegenüberliegend angeordnete Vorrichtungen (118, 119) gemäß einem oder mehreren der vorhergehenden Anspruche 1 - 16 vorgesehen sind.

18. Vorrichtung nach Anspruch 2, dadurch gekennzeichnet, daß die Abschnitte (320, 321) der Führungsbahn einen horizontalen Abstand voneinander aufweisen und die Teilabschnitte entlang einem eine horizontale Komponente enthaltenden Weg zwischen beiden Abschnitten (320, 321) hin- und herbewegbar sind.

## Claims

1. Apparatus for decorating articles comprising at least one treatment station for the articles which are each mounted on a respective article holder which is transported stepwise on a circulatory conveyor path along a guide track (20, 21, 31, 32; 120, 121; 320, 321) and, after passing at least one treatment station, are released from said article carrier (22a-x) and comprising at least one conveyor means for the article carriers, characterised in that the article carriers (22a-x) are releasably connectible to the reciprocable conveyor means (24, 25, 26, 27; 324, 325, 326, 327) and are in engagement upon movement thereof in the conveying direction (40, 41) and are out of engagement upon movement thereof in the opposite direction to the conveying direction (40, 41).

2. Apparatus according to claim 1 characterised in that the guide track comprises two portions (20, 21; 120, 121; 320, 321) which are disposed at a spacing from each other and the spacing between the two portions (20, 21; 120, 121; 320, 321) of the guide track is bridged across by reciprocally movable sections (30, 31).

3. Apparatus according to claim 2 characterised in that the portions (20, 21; 120, 121) of the guide track are at a vertical spacing from each other and the sections (31, 32) are reciprocally movable in a vertical direction.

4. Apparatus according to claim 3 caracterised in that associated with each portion (20, 21; 120, 121; 320, 321) of the guide track is a conveyor means in the form of at least one reciprocable entrainment bar (24, 25, 26, 27; 324, 325, 326, 327) which extends substantially parallel to the respective portion (20, 21; 120, 121; 320, 321) and which is reciprocable transversely with respect to the stroke movements thereof, which provide for conveyance of the article carriers (22a-x), in order to bring the entrainment bar into and out of engagement with article carriers (22a-x) disposed on the respective associated portion (20, 21).

5. Apparatus according to claim 4 characterised in that the two entrainment bars (24, 25, 26, 27; 324, 325, 326, 327) are connected by connecting elements (28, 29; 325, 329) to form a frame structure-like component and the one entrainment bar (26, 27; 326, 327) upon movement in the one direction (40), is in engagement with article carriers (28a-x) of the one guide track portion and the other entrainment bar (24, 25, 324, 325) upon movement in the other direction (41), is in engagement with article carriers (20a-x) of the other guide track portion (21).

6. Apparatus according to one of the preceding claims characterised in that associated with each guide track portion (20, 21; 120, 121; 320, 321) are two entrainment bars (24, 26; 25, 27; 324, 326; 325, 327) which are movable in opposition relative to each other.

7. Apparatus according to one of the preceding claims characterised in that the two oppositely movable entrainment bars (24, 26; 25, 27) of each portion (20, 21) are arranged one above the other.

8. Apparatus according to claim 6 or claim 7 characterised in that the two entrainment bars (24, 25; 26, 27; 324, 326; 325, 237) portions (20, 21; 320, 321), which bars are respectively moved in the same direction, are connected by way of connecting elements (28, 29; 328, 329) to form a frame structure-like component.

9. Apparatus according to one of the preceding claims characterised in that the two frame structure-like components formed by the entrainment bars (24, 25; 26, 27; 324, 325; 326, 327) and the connecting elements (28, 29; 325, 329) are carried by a common support element (44, 344) which is engaged by a drive member for transmitting the reciprocating movements in the transverse directions (64, 65; 364, 365).

10. Apparatus according to one of the preceding claims characterised in that each article carrier (22a-x) is provided with a projection (51; 35) which is engaged by the entrainment bars (24, 26; 25, 27; 324, 326; 325, 327).

11. Apparatus according to one of the preceding claims characterised in that the entrainment bars (24, 25, 26, 27; 324, 325, 326, 327) carry entrainment members (56c-e, 59a-d, 57a-c and 58a-d) for making the releasable connections to the article carriers (22a-x).

12. Apparatus according to one of the preceding claims characterised in that at least some of the entrainment members (59a-d, 57a-c, 58a-d) are mounted to the respective entrainment bars (24, 25; 26, 27; 324, 325; 326, 327) carrying same, at spacings from each other that correspond to the stroke movement performed by the respective entrainment bar (24, 25, 26, 27).

13. Apparatus according to one of the preceding claims characterised in that at least some of the entrainment members (56a-e, 59a-d, 57a-c, 58a-d) are mounted to the respective entrainment bar (24, 25, 26, 27; 324, 325, 326, 327) carrying same, at spacings from each other that correspond to double the stroke movement performed by the entrainment bars.

14. Apparatus according to claim 11 characterised in that the entrainment members (56a-e, 57a-c, 58c-d, 59a-d) of the entrainment bars (24, 26; 27, 25; 324, 325; 327, 325) respectively associated with the same guide track portion (20, 21; 120, 121; 320, 321) are of different lengths parallel to the reciprocating movements which are produced in the transverse directions (64, 65) and the shorter entrainment members (56a-e; 58a-d) are engaged with the respective projection (51; 351) in the limit position in which the said entrainment members are advanced towards the article carriers (22a-x) and the longer entrainment members (57a-c, 59a-d) are engaged with the respective projection (51; 351) in the opposite limit position.

15. Apparatus acording to one of the preceding claims characterised in that disposed in the stations in which the article carrier (22a-x) stops during two conveying stepping movements for the duration of a stepping movement, is a restraining element (67; 36) for securing the article carrier (22a-x) in its position.

16. Apparatus according to one of the preceding claims characterised in that the article carriers (22a-x) only hold the articles (30; 330) to be treated, at one side, and provided in at least one of the treatment stations is a reciprocally movable support means (238a) which, during the treatment operation carried out on an article (230), also supports said article at the other side thereof, wherein said support means (238a), in movement thereof in the direction of the article carrier (22a-x), moves synchronously therewith.

17. Apparatus according to one of the preceding claims characterised in that for the purposes of decorating articles (130) which are held at both sides, there are two apparatuses (118, 119) in accordance with one or more of preceding claims 1 to 16, which are disposed at a suitable spacing from each other in mutually oppositely disposed relationship.

18. Apparatus according to claim 2 characterised in that the guide track portions (320, 321) are at a horizontal spacing from each other and the sections are reciprocally movable between the two portions (320, 321) along a path which includes a horizontal component.

**Revendications**

1. Dispositif pour la décoration d'objets, comportant au moins un poste de traitement des dits objets qui y défilent successivement, portés chacun par un porte-objet avançant par à pas suivant une trajectoire fermée, le long d'une voie de guidage (20, 21, 31, 32; 120, 121; 320, 321), pour être ensuite retirés de leur porte-objet (22a à 22x) respectif après être passés en regard des divers postes de traitement, ce dispositif, qui comporte en outre au moins un système d'entraînement pour faire avancer les porte-objets, étant caractérisé en ce que les porte-objets (22a à 22x) sont reliés de manière amovible au système d'entraînement (24, 25, 26, 27; 324, 325, 326, 327) qui est animé d'un mouvement de va-et-vient, au cours duquel les porte-objets sont solidaires du système d'entraînement dans le sens de leur avancement (40, 41), et libres par rapport au système d'entraînement quand celui-ci se déplace dans le sens opposé à celui de leur avancement (40, 41).

2. Dispositif selon la revendication 1, caractérisé en ce que la voie de guidage comporte deux parties pricipales (20, 21; 120, 121; 320, 321) séparées par un certain écartement qui est couvert par des tronçons de voie (31, 32) animés d'un mouvement de va-et-vient.

3. Dispositif selon la revendication 2, caractérisé en ce que l'écartement entre les parties principales (20, 21; 120, 121) de la voie de guidage est vertical et que les tronçons de voie (31, 32) sont animés d'un mouvement de va-et-vient dans le sens vertical.

4. Dispositif selon la revendication 3, caractérisé en ce qu'à chaque partie principale (20, 21; 120, 121; 320, 321) de la voie de guidage est associe un organe d'entraînement, constitue par au moins une barre d'entraînement (24, 25, 26, 27; 324, 325, 326, 327) animée d'un mouvement de va-et-vient longitudinal, cette barre d'entraînement s'étendant dans une direction sensiblement parallèle à la partie principale correspondante de la voie (20, 21; 120, 121; 320, 321) et pouvant subir en outre un mouvement alternatif de coulissement dans un sens transversal à celui de l'avancement des porte-objets, afin d'assurer tantôt l'accouplement et tantôt le désaccouplement de cette barre d'entraînement par rapport aux porte-objets (22a à 22x) qui se trouvent sur la partie principale correspondante (20, 21) de la voie de guidage.

5. Dispositif selon la revendication 4, caractérisé en ce que les barres d'entraînement (24, 25, 26, 27; 324, 325, 326, 327) sont reliées deux à deux par des traverses de liaison (28, 29; 328, 329) avec chacune desquelles chaque paire de barres d'entraînement constitue un châssis mobile et que, lorsque l'une des barres d'entraînement (26, 27; 326, 327) de l'une des paires de barres est en prise avec les porte-objets (22a à 22x) situés sur l'une (20) des parties principales de la voie de guidage et se déplace longitudinalement dans un sens (40), une barre d'entraînement (24, 25; 324, 325) de l'autre paire de barres est enprise avec les porte-objets (22a à 22x) de l'autre partie principale (21) de la voie de guidage et se déplace longitudinalement dans l'autre sens (41).

6. Dispositf selon l'une des revendications 1 à 5, caractérisé en ce que deux barres d'entraînement (24, 26; 25, 27; 324, 326; 325, 327), animées de mouvements alternatifs longitudinaux de sens opposés, coopèrent avec chaque partie principale (20, 21; 120, 121; 320, 321) de la voie de guidage.

7. Dispositif selon l'une des revendications 1 à 6, caractérisé en ce que les deux barres d'entraînement (24, 26; 25, 27) animées de mouvements alternatifs longitudinaux de sens opposés, qui coopèrent avec chaque partie principale (20, 21) de la voie de guidage, sont disposées l'une au dessus de l'autre.

8. Dispositif selon l'une des revendications 6 ou 7, caractérisé en ce que les deux barres d'entraînement (24, 25; 26, 27; 324, 325; 326, 327), coopérant avec les deux parties principales (20, 21; 320, 321) de la voie de guidage et se déplaçant dans le même sens, sont reliées l'une à l'autre par des traverses de liaison (28, 29; 328, 329) pour constituer un châssis mobile.

9. Dispositif selon l'une des revendications 1 à 8, caractérisé en ce que les deux châssis mobiles constitués par les barres d'entraînement (24, 25; 26, 27; 324, 325; 326, 327) et par leurs traverses de liaison (28, 29; 328, 329) ont un support commun (44, 344), sur lequel agit un organe d'actionnement qui lui imprime un mouvement de va-et-vient orienté dans les directions tranversales (64, 65; 364, 365).

10. Dispositif selon l'une des revendications 1 à 9, caractérisé en ce que chaque porte-objet (22a à 22x) est pourvu d'un appendice latéral en saillie (51; 351) adapté à être saisi par les barres d'entraînement (24, 26; 25, 27; 324, 326; 325, 327).

11. Dispositif selon l'une des revendications 1 à 10, caractérisé en ce que les barres d'entraînement (24, 25, 26, 27; 324, 325, 326, 327) sont pourvues de pattes d'entraînement (56a à 56e, 59a à 59d, 57a à 57c, 58a à 58d) pour assurer les liaisons amovibles des dites barres avec les porte-objets (22a à 22x).

12. Dispositif selon l'une des revendications 1 à 11, caractérisé en ce qu'au moins un certain nombre des pattes d'entraînement (59a à 59d, 57a à 57c, 58a à 58d) sont placées sur les barres d'entraînement qui les porte (24, 25; 26, 27; 324, 325; 326, 327) à des intervalles successifs qui correspondent chacun à l'amplitude du mouvement alternatif longitudinal des barres d'entraînement (24, 25, 26, 27) respectives.

13. Dispositif selon l'une des revendications 1 à 12, caractérisé en ce qu'au moins un certain nombre des pattes d'entraînement (56a à 56e, 59a à 59d, 57a à 57c, 58a à 58d) sont placées sur leur barres d'entraînement respectives (24, 25, 26, 27; 324, 325, 326, 327) à des intervalles qui correspondent au double de l'amplitude du mouvement alternatif longitudinal effectué par ces barres d'entraînement.

14. Dispositif selon la revendication 11, caractérisé en ce que les pattes d'entraînement (56a à 56e, 57a à 57c, 58c à 58d, 59a à 59d) montées respectivement sur les barres d'entraînement (24, 26; 27, 25; 324, 328; 327, 325) associées à une même partie principale (20, 21; 120, 121; 320, 321) de la voie de guidage présentent des longueur différentes dans le sens du mouvement de va-et-vient transversal (64, 65) de ces barres d'entraînement, les pattes d'entraînement les plus courtes (56a à 56e; 58a à 58d) venant ainsi en prise avec l'appendice latéral (51; 351) en saillie sur un porte-objet, lorsque la barre d'entraînement correspondante se trouve avancée en position extrême d'engagement dans le sens transversal vers les porte-objets (22a à 22x), tandis que les pattes d'entraînement les plus longues (57a à 57c, 59a à 59d) sont en prise chacune avec la patte latérale (51; 351) d'un porte-objet lorsque la barre d'entraînement correspondante se trouve transversalement en position extrême de retrait par rapport aux porte-objets (22a à 22x).

15. Dispositif selon l'une des revendications 1 à 14, caractérisé en ce qu'il comporte un organe d'immobilisation (67, 367), à chacune des positions où les porte-objets (22a à 22x) doivent stationner entre deux phases de leur avancement, pendant une durée élémentaire d'avance, pour immobiliser temporairement chaque porte-objet à la position considérée.

16. Dispositif selon l'une des revendications 1 à 15, caractérisé en ce que les porte-objets (22a à 22x) ne supportent les objets à traiter (30, 330) que d'un seul côté et qu'il est pourvu, au moins à certains des postes de traitement, d'un support auxiliaire (238a) qui peut effectuer un mouvement de va-et-vient de manière à venir soutenir l'autre côté de l'objet à traiter (230), pendant l'opération de traitement et à l'accompagner en se déplaçant de façon synchrone avec le porte-objet (22a à 22x).

17. Dispositif selon l'une des revendications 1 à 16, caractérisé en ce qu'il est destiné à la décoration d'objets (130) maintenus des deux côtés et qu'il comporte deux dispositifs (118, 119) conformes à l'une des revendications 1 à 16, montés vis-à-vis l'un l'autre avec un écartement approprie.

18. Dispositif selon la revendication 2, caractérisé en ce que les parties principales (320, 321) de la voie de guidage sont montées avec un certain écartement relatif horizontal et que les tronçons de voie servant au transfert de l'une à l'autre effectuent un mouvement de va-et-vient entre ces parties principales (320, 321), suivant un trajet qui comporte une composante horizontale.

FIG.1

FIG.2

0 137 179

FIG.3

FIG.4

FIG.5

FIG. 6

FIG.7

FIG.8

FIG.9

FIG.10

FIG.11

FIG.12

FIG.13A

FIG.13B

0 137 179

FIG.14

0 137 179

FIG.15

FIG.16

FIG.17